(19) Europäisches Patentamt / European Patent Office / Office européen des brevets

(11) **EP 3 448 533 B1**

(12) **EUROPEAN PATENT SPECIFICATION**

(45) Date of publication and mention
of the grant of the patent:
**06.04.2022   Bulletin 2022/14**

(21) Application number: **17733725.0**

(22) Date of filing: **24.01.2017**

(51) International Patent Classification (IPC):
*A63B 22/06* (2006.01)        *A63B 24/00* (2006.01)
*A63F 13/25* (2014.01)        *A63B 21/005* (2006.01)
*A63B 71/06* (2006.01)        *A63F 13/218* (2014.01)
*A63F 13/245* (2014.01)        *A63F 13/214* (2014.01)
*G06F 3/01* (2006.01)        *A63F 13/212* (2014.01)

(52) Cooperative Patent Classification (CPC):
**A63B 24/0087; A63B 21/0058; A63B 22/0605;
A63F 13/212; A63F 13/214; A63F 13/218;
A63F 13/245; A63F 13/25; G06F 3/011;**
A63B 71/0622; A63B 2024/0093; A63B 2071/0638;
A63B 2071/0666; A63B 2220/20; A63B 2220/30;
(Cont.)

(86) International application number:
**PCT/CN2017/072463**

(87) International publication number:
**WO 2017/185843 (02.11.2017 Gazette 2017/44)**

(54) **EXERCISE EQUIPMENT AND EXERCISE EQUIPMENT ASSEMBLY, AND APPARATUS AND METHOD FOR SIMULATING EXERCISE ENVIRONMENT IN EXERCISE EQUIPMENT**

ÜBUNGSAUSRÜSTUNG UND ÜBUNGSAUSRÜSTUNGSANORDNUNG SOWIE VORRICHTUNG UND VERFAHREN ZUR SIMULATION EINER ÜBUNGSUMGEBUNG IN DER ÜBUNGSAUSRÜSTUNG

ÉQUIPEMENT D'EXERCICE ET ENSEMBLE ÉQUIPEMENT D'EXERCICE, ET APPAREIL ET PROCÉDÉ PERMETTANT DE SIMULER UN ENVIRONNEMENT D'EXERCICE DANS UN ÉQUIPEMENT D'EXERCICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2016   CN 201610280748**

(43) Date of publication of application:
**06.03.2019   Bulletin 2019/10**

(73) Proprietor: **BOE Technology Group Co., Ltd.
Beijing 100015 (CN)**

(72) Inventors:
• **SUN, Junmin
  Beijing 100176 (CN)**
• **HUANG, Guodong
  Beijing 100176 (CN)**
• **GUI, Zhongcheng
  Beijing 100176 (CN)**
• **NI, Pan
  Beijing 100176 (CN)**
• **LENG, Changlin
  Beijing 100176 (CN)**

(74) Representative: **Cohausz & Florack
Patent- & Rechtsanwälte
Partnerschaftsgesellschaft mbB
Bleichstraße 14
40211 Düsseldorf (DE)**

(56) References cited:
CN-A- 102 343 139        CN-A- 102 451 544
CN-A- 105 709 372        CN-U- 202 961 681
CN-U- 205 549 375        FR-B- 2 951 381
US-A1- 2007 033 068        US-A1- 2013 059 698

(52) Cooperative Patent Classification (CPC): (Cont.)
A63B 2220/53; A63B 2220/70; A63B 2220/78;
A63B 2220/80; A63B 2225/50; A63B 2230/01;
A63B 2230/75; A63F 13/803

**Description**

TECHNICAL FIELD

The present invention relates to smart fitness apparatuses, more particularly, to an exercise equipment and an exercise equipment assembly, and an apparatus and a method for simulating an exercise environment in an exercise equipment.

BACKGROUND

In recent years, the popularity of exercise bicycle has increased dramatically. Generally, a conventional exercise bicycle includes a frame with a pair of handles and a seat. A spoked wheel which is very similar to that used on a conventional bicycle is rotatably provided on the frame and is driven by a pair of pedals. The spoked wheel rotates freely and gives people a feeling as if on a bicycle. US patent application US 20130059698 A1 discloses a stationary exercise cycle includes a simulation system for simulating real-world terrain based on environmental and other real-world conditions. The exercise cycle may include a resistance mechanism that is adjusted based on changes in simulated slope, and by amounts simulating actual frictional and gravitational forces. The stationary exercise cycle takes into account actual or approximate physical information of the user in determining the real-world conditions that are simulated.

SUMMARY

In one aspect, the present disclosure provides an exercise equipment assembly, including an exercise equipment, a terminal device; and a virtual reality device; the exercise equipment comprising a main body; a transmission; a driving wheel rotatably mounted on the main body; a driven wheel rotatably mounted on the main body and operatively coupled to the driving wheel through the transmission; an actuator configured to actuate a driving force applied to the driven wheel; and a controller; wherein the controller is configured to control the actuator to actuate the driving force applied to the driven wheel based on a control parameter; a biometric collector configured to collect a biometric signal of a user, the biometric signal includes a palmprint signal or a fingerprint signal, and configured to transmit the biometric signal to the terminal device to verify the identity of the user, the biometric collector is disposed on the handlebar system, and the virtual reality device is virtual reality glasses configured to display a target virtual reality environment, and the terminal device is configured to transmit a signal to the virtual reality device for displaying the target virtual reality environment corresponding to a target virtual reality environment option; wherein the terminal device is also configured to determine a body weight of the user based on the pressure applied to the exercise equipment, and determine a fitness regimen based on the body weight.

Optionally, the exercise equipment further comprises a communication block; wherein the controller and the communication block are communicatively connected with each other; the communication block is configured to receive the control parameter from a terminal device and configured to transmit the control parameter to the controller; and the controller is configured to control the actuator to actuate the driving force applied to the driven wheel based on the control parameter received from the communication block.

Optionally, the exercise equipment further comprises the biometric collector being communicatively connected with the communication block; wherein the biometric collector is configured to transmit the biometric signal to the terminal device through the communication block.

Optionally, the exercise equipment further comprises a pressure measurement device being communicatively connected with the communication block; wherein the pressure measurement device is configured to measure a pressure applied to the exercise equipment, and configured to transmit a value of the pressure to the terminal device through the communication block.

Optionally, the exercise equipment further comprises a seat system attached to the main body; wherein the pressure measurement device is disposed on the seat system.

Optionally, the exercise equipment further comprises a rotating speed measurement device being communicatively connected with the communication block; wherein the rotating speed measurement device is configured to measure a rotating speed of the driving wheel, and configured to transmit a value of the rotating speed to the terminal device through the communication block; and the controller is configured to control the actuator to adjust a target duration during which the driving force is applied to the driven wheel based on the target exercise duration received from the communication block.

Optionally, the exercise equipment further comprises a base; a handlebar system; and a first crank, a second crank, and an axle shaft; wherein the actuator comprises an electric motor; the main body has an arch shape structure having a first end and a second end; a first side of the first end is securely attached to a first side of the base, the first side of the base being co-planar with a planar surface tangent to the first side of the first end; the main body comprises a first mount for securely mounting the driving wheel on the main body, the first mount being on a second side of the first end opposite to the first side of the first end; the main body comprises a second mount for securely mounting the seat system on the main body, the second mount being on a first side of the second end; the main body comprises a third mount for securely mounting the handlebar system on the main body, the third mount being between the first mount and the second mount; the base comprises a fourth mount for securely mounting the electric motor on the base; the first crank and the second crank respectively attached to a first end and a second end of the axle shaft; and the first crank and the second crank coupled with the driving wheel through the axle shaft.

Optionally, the exercise equipment further comprises a fifth mount for mounting a terminal device on the handlebar system.

Optionally, the first mount, the second mount, and the third mount are integral with the main body; the fourth mount is integral with the base; and the fifth mount is integral with the handlebar system.

Optionally, the excise equipment assembly; wherein the terminal device is configured to display at least one virtual reality environment options; receive an input indicating one of the at least one virtual reality environment options as a target virtual reality environment option.

In another aspect, the excise equipment assembly further comprising an apparatus for simulating an exercise environment in an exercise equipment; wherein the apparatus for simulating the exercise environment comprises a memory; and one or more processors; wherein the memory and the at least one processor are communicatively connected with each other; the memory stores computer-executable instructions for controlling the one or more processors to receive an input comprising a simulation parameter for simulating environmental conditions for exercise; generate a control parameter for controlling the actuator based on the simulation parameter; and transmit the control parameter to the communication block; wherein the communication block is configured to receive the control parameter from the apparatus for simulating the exercise environment and configured to transmit the control parameter to the controller; and the controller is configured to control the actuator to actuate the driving force applied to the driven wheel based on the control parameter received from the communication block.

Optionally, the apparatus further comprises a virtual reality device; wherein the memory stores computer-executable instructions for controlling the one or more processors to display at least one virtual reality environment options; receive an input indicating one of the at least one virtual reality environment options as a target virtual reality environment option; and transmit a signal to the virtual reality device for displaying a target virtual reality environment corresponding to the selected virtual reality environment option; and the virtual reality device is configured to display the target virtual reality environment.

Optionally, the memory stores computer-executable instructions for controlling the one or more processors to receive a signal from the communication block indicating a pressure applied to the exercise equipment by a user; determine a body weight of the user based on the pressure; receive an input indicating a target body weight; and determine a fitness regimen based on the body weight and the target body weight.

Optionally, the memory stores computer-executable instructions for controlling the one or more processors to receive an input indicating a target exercise distance; determine one or both of a target amount of calories-burned and a target amount of sweat-generated based on the simulation parameter and the target exercise distance; generate an exercise summary based on one or both of the target amount of calories-burned and the target amount of sweat-generated; and display the exercise summary.

Optionally, the memory stores computer-executable instructions for controlling the one or more processors to receive a signal from the communication block indicating a rotating speed of the driving wheel; determine an exercise speed based on a value of the rotating speed of the driving wheel; determine a target exercise duration based on the target exercise distance and the exercise speed; and transmit a signal indicating the target exercise duration to the communication block; wherein the communication block is configured to receive the signal indicating the target exercise duration from the apparatus for simulating the exercise environment and configured to transmit the signal indicating the target exercise duration to the controller; and the controller is configured to control the actuator to adjust a target duration during which the driving force is applied to the driven wheel based on the target exercise duration received from the communication block.

Optionally, the actuator comprises an electric motor; the simulation parameter comprises a road condition parameter for simulating one of a plurality of environmental conditions for exercise comprising an uphill riding condition, a downhill riding condition, and a flat surface riding condition; the control parameter comprises a road condition control parameter for controlling the electric motor in a first operating state or in a second operating state, the electric motor being driven by the driven wheel in the first operating state, the electric motor capable of actively rotating thereby driving the driven wheel; the memory stores computer-executable instructions for controlling the one or more processors to receive a first input comprising a first road condition parameter for simulating the uphill riding condition; and generate a first road condition control parameter based on the first road condition parameter for controlling the electric motor in the first operating state; or receive a second input comprising a second road condition parameter for simulating the flat surface riding condition; and generate a second road condition control parameter and a first torque parameter based on the first road condition parameter for controlling the electric motor in the second operating state, the first torque parameter having a value less than a threshold value; or receive a third input comprising a third road condition parameter and a slope gradient parameter for simulating the downhill riding condition; and generate a third road condition control parameter based on the third road condition parameter and a second torque parameter based on the slope gradient parameter for controlling the electric motor in the second operating state, the second torque parameter being negatively correlated to the slope gradient parameter.

Optionally, the memory stores computer-executable instructions for controlling the one or more processors to generate the second torque parameter based on the slope gradient parameter according to the following equation $T=\Psi/A$; wherein T is the second torque parameter, A is the slope gradient parameter, and $\Psi$ is a coefficient.

Optionally, the controller is configured to control the actuator to actuate the driving force applied to the driven wheel based on the control parameter received from the communication block; the controller is configured to control the electric motor to be in the first operating state thereby actuating the driving force applied to the driven wheel, when an input comprising the first road condition parameter is received by the apparatus for simulating the exercise environment; or control the electric motor to be in the second operating state, and actuate the driving force applied to the driven wheel based on the first torque parameter, when an input comprising the second road condition parameter is received by the apparatus for simulating the exercise environment; or control the electric motor to be in the second operating state, and actuate the driving force applied to the driven wheel based on the second torque parameter, when an input comprising the third road condition parameter is received by the apparatus for simulating the exercise environment.

## BRIEF DESCRIPTION OF THE FIGURES

The following drawings are merely examples for illustrative purposes according to various disclosed embodiments and are not intended to limit the scope of the present invention.

FIG. 1 is a schematic diagram illustrating the structure of an exercise equipment in some embodiments according to the present disclosure.

FIG. 2 is a schematic diagram illustrating the structure of an exercise equipment assembly in some embodiments according to the present disclosure.

FIG. 3 is a flow chart illustrating a method implemented in an apparatus for simulating an exercise environment in an exercise equipment in some embodiments according to the present disclosure.

FIG. 4 is a flow chart illustrating a method implemented in an apparatus for simulating an exercise environment in an exercise equipment in some embodiments according to the present disclosure.

FIG. 5 is a flow chart illustrating a method implemented in an apparatus for controlling the actuator to actuate the driving force applied to the driven wheel based on the control parameter in some embodiments according to the present disclosure.

FIG. 6 is a schematic diagram illustrating the structure of an apparatus for simulating an exercise environment in an exercise equipment in some embodiments according to the present disclosure.

## DETAILED DESCRIPTION

The disclosure will now be described more specifically with reference to the following embodiments. It is to be noted that the following descriptions of some embodiments are presented herein for purpose of illustration and description only. It is not intended to be exhaustive or to be limited to the precise form disclosed.

Conventional exercise bicycles are used in a gym or at home. Typically, in a conventional exercise bicycle, the seat, the handlebar, and the wheels are securely attached to the main body. The cranks are operatively connected to the wheels through an axle shaft. A user is situated on the seat with hands on the handlebar and feet on the cranks. The user exercises by pedaling the on the cranks thereby driving the wheel through the axle shaft. The conventional exercise bicycles have limited functions and cannot be personalized. A user using the conventional exercise bicycles cannot adjust the level of exercise intensity. Thus, the conventional exercise bicycle is incapable of meeting the user's fitness needs on an individualized level.

Accordingly, the present invention provides, *inter alia,* an exercise equipment and an exercise equipment assembly, and an apparatus and a method for simulating an exercise environment in an exercise equipment that substantially obviate one or more of the problems due to limitations and disadvantages of the related art. In one aspect, the present disclosure provides an exercise equipment. In some embodiments, the exercise equipment includes a main body; a transmission; a driving wheel rotatably mounted on the main body; a driven wheel rotatably mounted on the main body and operatively coupled to the driving wheel through the transmission; and an actuator configured to actuate a driving force applied to the driven wheel.

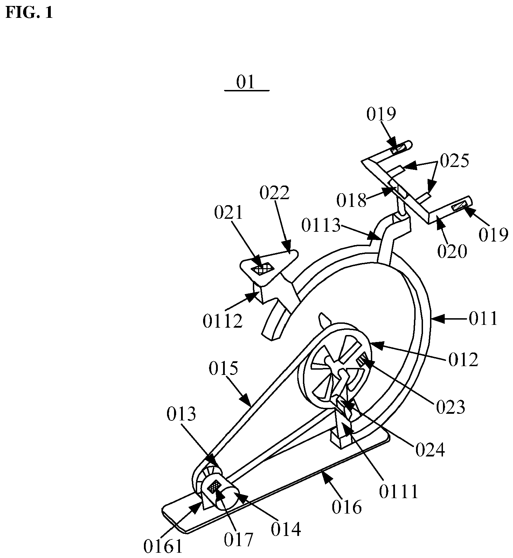

FIG. 1 is a schematic diagram illustrating the structure of an exercise equipment in some embodiments according to the present disclosure. Referring to FIG. 1, the exercise equipment 01 in some embodiments is an exercise cycling machine. In some embodiments, the exercise equipment 01 includes a main body 011, a transmission 015, a driving wheel 012 rotatably mounted on the main body 011, a driven wheel 013 rotatably mounted on the main body 011 and operatively coupled to the driving wheel 012 through the transmission 015, and an actuator 014 configured to actuate a driving force applied to the driven wheel 013. Optionally, the actuator 014 includes an electric motor. The driving force applied to the driven wheel 013 may be actuated by adjusting the rotating speed of the electric motor. The rotating speed of the electric motor may be adjusted through a gearbox. The gearbox is coupled with the electric motor, and may be disposed on the electric motor. Optionally, the gearbox is a part of the electric motor.

The driving wheel 012 is disposed on the main body 011. Optionally, the driving wheel 012 is securely attached to the main body 011. Optionally, the driving wheel 012 is detachably attached to the main body 011. The driving wheel 012 and the driven wheel 013 are operatively coupled to each other through the transmission 015. The driven wheel 013 is operatively coupled to the actuator 014, the actuator 014 is configured to actuate a driving force applied to the driven wheel 013. Optionally, the driven wheel 013 is coupled with the actuator 014 through an axle shaft.

In the present exercise equipment, the actuator 014 is capable of actuating the driving force applied to the driven wheel 013. Because the driven wheel 013 is coupled with the driving wheel 012, the actuator 014 is also capable of actuating the driving force applied to the driving wheel 012 indirectly. By having this design, a user may conveniently adjust a level of exercise intensity on an individual basis according to the user's fitness needs. As compared to the conventional exercise equipment that has limited functions and cannot be personalized, the present exercise equipment has enriched functionalities that can easily meet the user's fitness needs on an individualized level.

Examples of transmission 015 include, but are not limited to, a transmission gear, a transmission chain, and a transmission belt. Optionally, the transmission 015 is a transmission belt.

Referring to FIG. 1, the exercise equipment 01 in some embodiments further includes a base 016. The main body 011 and the driven wheel 013 are securely attached to the base 016. Optionally, the actuator 014 includes an electric motor, the actuator 014 is securely attached to the base 016. The electric motor and the driven wheel 013 are operatively coupled with each other through an axle shaft. Having the actuator 014 securely attached to the base 016 facilitates the actuation of driving force applied to the driven wheel 013 by the actuator 014.

Referring to FIG. 1, the exercise equipment 01 in some embodiments further includes a controller 017 and a communication block 018, the controller 017 and the communication block 018 being communicatively connected with each other. Optionally, the controller 017 is built-in to the actuator 014. The communication block 018 is configured to receive a control parameter from a terminal device (e.g., a mobile device such as a mobile phone, a personal computer, a tablet computer, and a PDA) and configured to transmit the control parameter to the controller 017. The controller 017 is configured to control the actuator 014 to actuate the driving force applied to the driven wheel 013 based on the control parameter received from the communication block 018. The communication block 018 may be a wireless communication block or a wired communication block. Examples of wireless communication blocks include, but are not limited to, a wireless fidelity (WIFI) communication block, a Bluetooth communication block, an infrared communication block, a ZidBee communication block, and so on. Examples of wired communication blocks include, but are not limited to, a Universal Serial Bus (USB) communication module or the like.

In some embodiments, the actuator 014 includes an electric motor, and the controller 017 is an electric motor controller configured to control an operating state and a torque of the electric motor. In one example, the electric motor controller is configured to control the electric motor to be turned on, or turned off, or in an enabled state. The communication block 018 is communicatively connected with the terminal device. Examples of terminal devices include, but are not limited to, a smart phone and a tablet computer. The terminal device is configured to receive a user input, generate a control parameter for controller the actuator 014 based on the user input, and transmit the control parameter to the controller 017. Upon receiving the control parameter, the controller 017 is configured to control the actuator to actuate the driving force applied to the driven wheel based on the control parameter received from the communication block. Examples of control parameters include, but are not limited to, a rotating speed of the electric motor and a torque of the electric motor.

Referring to FIG. 1, the exercise equipment 01 in some embodiments further includes a biometric collector 019 being communicatively connected with the communication block 018. The biometric collector 019 is configured to collect a biometric of a user, and configured to transmit the biometric signal to the terminal device through the communication block 018, thereby enabling the terminal device to verify the identity of the user based on the biometric signal. Optionally, the biometric collector 019 includes a palmprint sensor, a fingerprint sensor, or both. Optionally, the biometric signal includes a palmprint signal, a fingerprint signal, or both. As shown in FIG. 1, the exercise equipment 01 in some embodiments further includes a handlebar system 020 securely attached to the main body 011. The biometric collector 019 is disposed on the handlebar system 020 for conveniently collecting biometric characteristics of the user, e.g., a palmprint, a fingerprint, or both. Optionally, the handlebar system 019 includes a pair of handlebars. Optionally, each of the pair of handlebars includes a biometric collector 019 for efficiently collecting biometric signals of the user.

Referring to FIG. 1, the exercise equipment 01 in some embodiments further includes a pressure measurement device 021 being communicatively connected with the communication block 018. The pressure measurement device 021 is configured to measure a pressure applied to the exercise equipment 01 (e.g., a pressure applied to a seat system of the exercise equipment 01), and configured to transmit a value of the pressure to the terminal device through the communication block 018. The terminal device is configured to determine a body weight of the user based on the pressure applied to the exercise equipment 01, and determine a fitness regimen based on the body weight. Optionally, the pressure measurement device 021 includes a pressure sensor. As shown in FIG. 1, the exercise equipment 01 in some embodiments further includes a seat system 022 attached to the main body 011. Optionally, the pressure measurement device 021 is disposed on the seat system 022. Optionally, the pressure measurement device 021 includes a plurality of pressure sensors disposed on the seat system 022.

Referring to FIG. 1, the exercise equipment 01 in some embodiments further includes a rotating speed measurement device 023 being communicatively connected with the communication block 018. The rotating speed measurement device 023 is configured to measure a rotating speed of the driving wheel 012, and configured to transmit a value of the measured rotating speed to the terminal device through the communication block 018. The controller 017 is configured to receive a target exercise duration (e.g., a target cycling duration when the exercise equipment is an exercise cycling machine), and configured to control the actuator 014 to adjust a target duration during which the driving force is applied to the driven wheel 013 based on the target exercise duration received from the communication block 018. Optionally, a user can input a target exercise distance (e.g., a target cycling distance when the exercise equipment is an exercise cycling machine). The terminal device is configured to receive the input indicating the target exercise distance, receive the signal indicating the rotating speed of the driving wheel 012 through the communication block 018, determine an exercise speed based on the rotating speed of the driving wheel, determine a target exercise duration based on the target exercise distance and the exercise speed, and transmit a signal indicating the target exercise duration to the communication block 018. The communication block 018 is configured to receive the signal indicating the target exercise duration from the terminal device and configured to transmit the signal indicating the target exercise duration to the controller 017. The controller 017 is configured to control the actuator 014 to adjust a target duration during which the driving force is applied to the driven wheel 013 based on the target exercise duration received from the communication block 018. Optionally, the rotating speed measurement device 023 is disposed on the driving wheel 012. Optionally, the rotating speed measurement device 023 includes a speed sensor.

Referring to FIG. 1, the exercise equipment 01 in some embodiments further includes a pair of crank 024 (e.g., a first crank and a second crank). Optionally, the pair of cranks 024 (e.g., the first crank and the second crank) are coupled with the driving wheel 012 through an axle shaft. Optionally, the first crank and the second crank respectively attached to a first end and a second end of the axle shaft. Optionally, the driven wheel 013 is coupled with the actuator 014 through another axle shaft. When a user is pushing on the pair of cranks 024, the pair of cranks 024 drive the driving wheel 012 through the axle shaft, and in turn, the driving wheel 012 drives the driving wheel 013 through the transmission 015. The driven wheel 013 in turn drives the actuator 014 through another axle shaft. By having this design, the actuator 014 actuates the driving force applied to the pair of cranks 024, thereby adjusting the level of exercise intensity.

In some embodiments, the main body 011 has an arch shape structure having a first end and a second end. A first side of the first end of the main body 011 is securely attached to a first side (e.g., the top side) of the base 016. The first side of the base 016 is co-planar with a planar surface tangent to the first side of the first end of the main body 011. The main body 011 includes a first mount 0111 for securely mounting the driving wheel 012 on the main body 011. The first mount 0111 is on a second side of the first end of the main body 011, the second side being substantially opposite to the first side of the first end of the main body 011. Optionally, the first mount 0111 is disposed on the main body 011. Optionally, the first mount 0111 is integral with the main body 011. The main body 011 includes a second mount 0112 for securely mounting the seat system 022 on the main body 011. The second mount 0112 is on a first side of the second end of the main body 011. Optionally, the second mount 0112 is disposed on the main body 011. Optionally, the second mount 0112 is integral with the main body 011. The main body 011 further includes a third mount 0113 for securely mounting the handlebar system 020 on the main body 011. The third mount 0113 is between the first mount 0111 and the second mount 0112, e.g., on a position proximal to the second mount 0112. Optionally, the third mount 0113 is disposed on the main body 011. Optionally, the third mount 0113 is integral with the main body 011. The base 016 includes a fourth mount 0161 for securely mounting an electric motor on the base 016. Optionally, the fourth mount 0161 is disposed on the base 016. Optionally, the fourth mount 0161 is integral with the base 016.

In some embodiments, the exercise equipment 01 further includes a fifth mount 025 for mounting a terminal device on the handlebar system 020. Optionally, the fifth mount 025 is disposed on the handlebar system 020. Optionally, the fifth mount 025 is integral with the handlebar system 020. The terminal device may be mounted on the exercise equipment 01 through the fifth mount 025, e.g., on the handlebar system 020, and communicatively connected with the exercise equipment 01 through the communication block 018.

In the present exercise equipment, the actuator 014 is capable of actuating the driving force applied to the driven wheel 013. Because the driven wheel 013 is coupled with the driving wheel 012, the actuator 014 is also capable of actuating the driving force applied to the driving wheel 012 indirectly. By having this design, a user may conveniently adjust a level of exercise intensity on an individual basis according to the user's fitness needs. As compared to the conventional exercise equipment that has limited functions and cannot be personalized, the present exercise equipment has enriched functionalities that can easily meet the user's fitness needs on an individualized level.

Many bikers prefer biking outdoors. Due to various environmental factors such as air quality, heavy traffic, and bad weather, many cycling lovers have to give up outdoor biking. Moreover, outdoor biking is prone to accident which often results in injuries. Conventional indoor cycling machines, however, have very limited functionalities, and cannot be personalized to satisfy individual fitness needs, resulting in a poor user experience. The present exercise equipment (e.g., an exercise cycling machine) provides a variety of road condition experiences through controlling the operating state and torque of the electric motor, thus allowing the cycling lovers to experience outdoor biking experience in an indoor environment. The present exercise equipment provides a highly entertaining exercising experience.

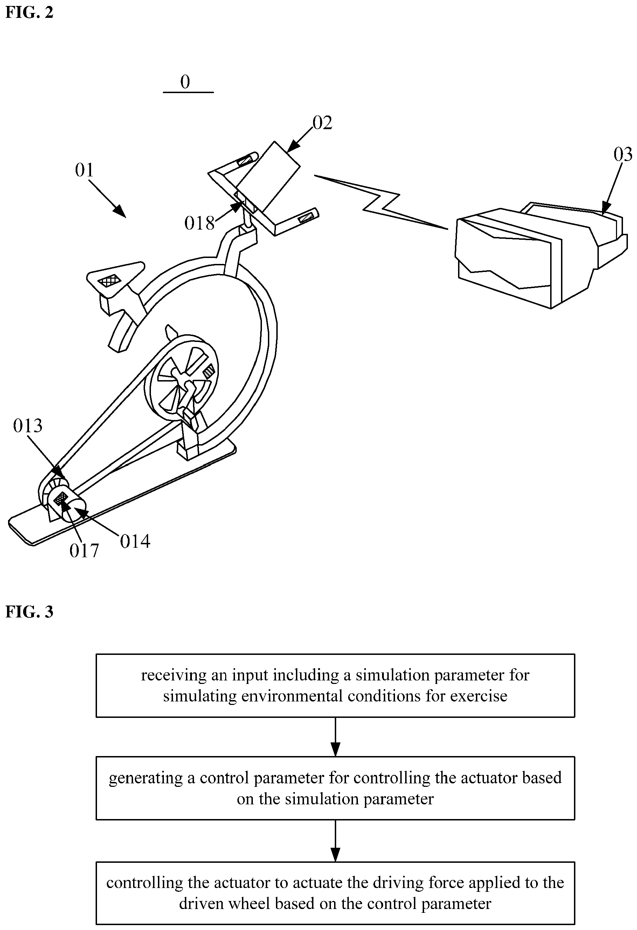

FIG. 2 is a schematic diagram illustrating the structure of an exercise equipment assembly in some embodiments according to the present disclosure. Referring to FIG. 2, the exercise equipment assembly 0 includes an exercise equipment 01 as described herein (e.g., an exercise equipment as shown in FIG. 1).

In some embodiments, the exercise equipment assembly 0 further includes a terminal device 02. The exercise equipment 01 includes a fifth mount for mounting the terminal device 02 on the exercise equipment 01, and a communication block 018 in communication with the terminal device 02. The terminal device 02 can be mounted on the exercise equipment 01 through the fifth mount, and be communicatively connected to the exercise equipment 01 through the communication block 018. Optionally, the exercise equipment 01 further includes a controller 017, the controller 017 and the communication block 018 being communicatively connected with each other.

In some embodiments, the terminal device 02 is configured to receive an input including a simulation parameter for simulating environmental conditions for exercise; generate a control parameter for controlling the actuator 014 based on the simulation parameter. Optionally, the transmit the terminal device 02 is configured to the control parameter to the communication block 018; the communication block 018 is configured to receive the control parameter from the terminal device 02 and configured to transmit the control parameter to the controller 017; and the controller 017 is configured to control the actuator 014 to actuate the driving force applied to the driven wheel 013 based on the control parameter received from the communication block 018.

In some embodiments, the exercise equipment assembly 0 further includes a virtual reality device 03. Examples of virtual reality devices include, but are not limited to, a virtual reality headset, a virtual reality helmet, and virtual reality glasses. As shown in FIG. 2, the virtual reality device 03 is virtual reality glasses. The virtual reality device 03 is in communicatively connection with the terminal device 02.

In some embodiments, the terminal device is configured to display at least one virtual reality environment options (e.g., to a user); receive an input (e.g., a user input) indicating that one of the at least one virtual reality environment options is selected as a target virtual reality environment option; transmit a signal to the virtual reality device 03 for displaying a target virtual reality environment corresponding to the selected virtual reality environment option by the virtual reality device 03. The virtual reality device 03 is configured to display the target virtual reality environment.

In the present exercise equipment assembly, the actuator 014 is capable of actuating the driving force applied to the driven wheel 013. Because the driven wheel 013 is coupled with the driving wheel, the actuator 014 is also capable of actuating the driving force applied to the driving wheel indirectly. By having this design, a user may conveniently adjust a level of exercise intensity on an individual basis according to the user's fitness needs. As compared to the conventional exercise equipment that has limited functions and cannot be personalized, the present exercise equipment has enriched functionalities that can easily meet the user's fitness needs on an individualized level.

Moreover, in the present exercise equipment assembly, the virtual reality device 03 is capable of displaying the target virtual reality environment. While the user is exercising on the exercise equipment assembly, the user may experience an outdoor exercising environment through the virtual reality device 03. In such a simulated environment, the user can enjoy the outdoor exercising fun while staying indoors.

In another aspect, the present disclosure provides a method for simulating an exercise equipment. FIG. 3 is a flow chart illustrating a method implemented in an apparatus for simulating an exercise environment in an exercise equipment in some embodiments according to the present disclosure. Referring to FIG. 3, the method in some embodiments includes receiving an input including a simulation parameter for simulating environmental conditions for exercise; generating a control parameter for controlling the actuator based on the simulation parameter; and controlling the actuator to actuate the driving force applied to the driven wheel based on the control parameter. The method may be implemented in an exercise equipment assembly as described herein, e.g., an exercise equipment assembly 02 as shown in FIG. 2. In some embodiments, the exercise equipment assembly includes an exercise equipment (e.g., an exercise equipment 01 as shown in FIG. 1), and a terminal device (e.g., a terminal device 02 as shown in FIG. 2). Optionally, the exercise equipment includes a main body, a transmission, a driving wheel rotatably mounted on the main body, a driven wheel rotatably mounted on the main body and operatively coupled to the driving wheel through the transmission, an actuator configured to actuate a driving force applied to the driven wheel, a controller, and a communication block, the controller and the communication block being communicatively connected with each other.

According to the present method, the terminal device is capable of controlling the actuator to actuate the driving force applied to the driven wheel based on the control parameter, and in turn adjust the driving force applied on the driving wheel through the transmission. As a result, a user may conveniently adjust a level of exercise intensity on an individual basis according to the user's fitness needs. As compared to the conventional exercise equipment that has limited functions and cannot be personalized, the present exercise equipment has enriched functionalities that can easily meet the user's fitness needs on an individualized level.

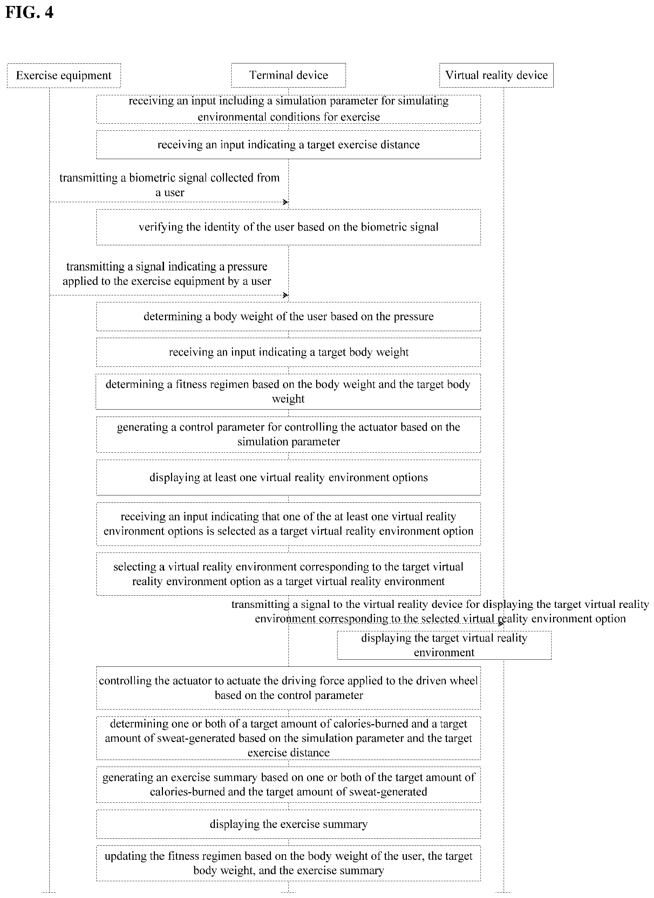

FIG. 4 is a flow chart illustrating a method implemented in an apparatus for simulating an exercise environment in an exercise equipment in some embodiments according to the present disclosure. The method may be implemented in an exercise equipment assembly as described herein, e.g., an exercise equipment assembly 02 as shown in FIG. 2. In some embodiments, the exercise equipment assembly includes an exercise equipment (e.g., an exercise equipment 01 as shown in FIG. 1), a terminal device (e.g., a terminal device 02 as shown in FIG. 2), and a virtual reality device (e.g., a virtual reality device 03 as shown in FIG. 2). Optionally, the exercise equipment includes a main body, a transmission, a driving wheel rotatably mounted on the main body, a driven wheel rotatably mounted on the main body and operatively coupled to the driving wheel through the transmission, an actuator configured to actuate a driving force applied to the driven wheel, a controller, and a communication block, the controller and the communication block being communicatively connected with each other. Referring to FIG. 4, the method in some embodiments includes receiving (by the terminal device) an input including a simulation parameter for simulating environmental conditions for exercise.

In some embodiments, the simulation parameter for simulating environmental conditions for exercise includes at least a road condition parameter for simulating one of a plurality of environmental conditions for exercise including an uphill riding condition, a downhill riding condition, and a flat surface riding condition. Optionally, the simulation parameter for simulating environmental conditions for exercise includes a road condition parameter and a slope gradient parameter for simulating the downhill riding condition. For example, the road condition parameter may be represented as Y, Y = Y1 when the road condition parameter is used for simulating an uphill riding condition; Y = Y2 when the road condition parameter is used for simulating flat surface riding condition; and Y = Y3 when the road condition parameter is used for simulating a downhill riding condition. The slope gradient parameter may be represented as A. Optionally, $0 < A \leq 30$ degree.

Examples of terminal devices include, but are not limited to, a smart phone and a tablet computer. The terminal device optionally includes a user interface for inputting the simulation parameter. The user may input the simulation parameter through the user interface. The terminal device receives the user input indicating the simulation parameter through the user interface. In one example, the user interface includes a first data entry box for inputting a road condition parameter, a second data entry box for inputting a slope gradient parameter, an "OK" button for confirming a user input, and a "cancel" button for canceling a user input. The user may input the road condition parameter in the first data entry box, input the slope gradient parameter in the second data entry box, and click or press on the "OK" button to trigger the simulation parameter input command. The terminal device receives the simulation parameter by receiving and executing the simulation parameter input command. In another example, the user may click or press on the "cancel" button to cancel the current input of the simulation parameter.

Referring to FIG. 4, the method in some embodiments further includes receiving (by the terminal device) an input indicating a target exercise distance (e.g., a target cycling distance). In some embodiments, the terminal device includes a user interface for inputting the target exercise distance. The user may input the target exercise distance through the user interface. The terminal device receives the user input indicating the target exercise distance through the user interface. In one example, the user interface includes a data entry box for inputting a target exercise distance, an "OK" button for confirming a user input, and a "cancel" button for canceling a user input. The user may input the target exercise distance in the data entry box, and click or press on the "OK" button to trigger the target exercise distance input command. The terminal device receives the target exercise distance by receiving and executing the target exercise distance input command. In another example, the user may click or press on the "cancel" button to cancel the current input of the target exercise distance.

Referring to FIG. 4, the method in some embodiments further includes transmitting a biometric signal collected from a user from the exercise equipment to the terminal device. In some embodiments, the exercise equipment includes a biometric collector and a communication block. Through the biometric collector, the exercise equipment may collect a biometric of a user, and transmit the biometric signal to the terminal device through the communication block.

Optionally, the biometric collector includes a palmprint sensor, a fingerprint sensor, or both. Optionally, the biometric signal includes a palmprint signal, a fingerprint signal, or both. The exercise equipment in some embodiments further includes a handlebar system securely attached to the main body. The biometric collector is disposed on the handlebar system for conveniently collecting biometric characteristics of the user, e.g., a palmprint, a fingerprint, or both. Optionally, the handlebar system includes a pair of handlebars. Optionally, each of the pair of handlebars includes a biometric collector for efficiently collecting biometric signals of the user.

The communication block may be a wireless communication block or a wired communication block. Examples of wireless communication blocks include, but are not limited to, a wireless fidelity (WIFI) communication block, a Bluetooth communication block, an infrared communication block, a ZidBee communication block, and so on. Examples of wired communication blocks include, but are not limited to, a Universal Serial Bus (USB) communication module or the like.

Referring to FIG. 4, the method in some embodiments further includes verifying (by the terminal device) the identity of the user based on the biometric signal. The exercise equipment is configured to transmit a biometric signal to the terminal device, the terminal device is configured to receive the biometric signal transmitted from the exercise equipment, and verify the identity of the user based on the biometric signal.

In some embodiments, one or more biometric characteristic information may be stored in the terminal device in advance. The one or more biometric characteristic information stored in the terminal device may be collected from the exercise equipment in advance and stored in the terminal device ready for future use. The terminal device in some embodiments is configured to compare a biometric signal currently received from the exercise equipment with the one or more biometric characteristic information stored in the terminal device, to verify the identity of the user. If a match between the biometric signal currently received and one of the biometric characteristic information stored in the terminal device is found, the identity of the user is verified successfully. If a match between the biometric signal currently received and any one of the biometric characteristic information stored in the terminal device is not found, the identity verification fails.

Referring to FIG. 4, the method in some embodiments further includes transmitting a signal indicating a pressure applied to the exercise equipment by a user from the exercise equipment to the terminal device. The exercise equipment in some embodiments includes a pressure measurement device being communicatively connected with the communication block. The pressure measurement device is configured to measure a pressure applied to the exercise equipment, and configured to transmit a value of the pressure to the terminal device through the communication block.

Optionally, the pressure measurement device includes a pressure sensor. The exercise equipment in some embodiments further includes a seat system attached to the main body. Optionally, the pressure measurement device is disposed on the seat system. Optionally, the pressure measurement device includes a plurality of pressure sensors disposed on the seat system

Referring to FIG. 4, the method in some embodiments further includes determining (by the terminal device) a body weight of the user based on the pressure applied to the exercise equipment. The exercise equipment is configured to transmit a value of the pressure to the terminal device through the communication block, the terminal device is configured to receive the value of the pressure, and determine the body weight of the user based on the pressure applied to the exercise equipment.

In some embodiments, the terminal device stores a formula for converting between the applied pressure and the body weight. The terminal device in some embodiments determines the body weight based on the measured pressure applied to the exercise equipment and the conversion formula. Optionally, the formula is expressed as F = M x g, wherein F stands for the pressure, M stands for the body weight, and g is a constant of 9.8 m/s$^2$.

Referring to FIG. 4, the method in some embodiments further includes receiving (by the terminal device) an input indicating a target body weight. In some embodiments, the terminal device includes a user interface for inputting the target body weight. The user may input the target body weight through the user interface. The terminal device receives the user input indicating the target body weight through the user interface. In one example, the user interface includes a data entry box for inputting a target body weight, an "OK" button for confirming a user input, and a "cancel" button for canceling a user input. The user may input the target body weight in the data entry box, and click or press on the "OK" button to trigger the target body weight input command. The terminal device receives the target body weight by receiving and executing the target body weight input command. In another example, the user may click or press on the "cancel" button to cancel the current input of the target body weight.

Referring to FIG. 4, the method in some embodiments further includes determining (by the terminal device) a fitness regimen based on a measured body weight and the target body weight. The terminal device is configured to receive an input indicating a target body weight, and determine a fitness regimen based on the user's measured body weight and the target body weight. In one example, the terminal device is configured to conduct an analysis on the user's measured body weight and the target body weight, and determine a fitness regimen based on a result of the analysis.

In some embodiments, the user may input other related information into the terminal device, and the terminal device is configured to conduct the analysis on a combination of the measured body weight, the target body weight, and other related information and determine a fitness regimen based on a result of the analysis. Examples of related information include, but are not limited to, a target exercise duration, age, gender, health conditions, etc. In one example, the user inputs a target body weight, a target exercise duration, age, gender, health condition information, and the terminal device is configured to conduct the analysis based on the measured body weight, the target body weight, the target exercise duration, age, gender, and the user's health condition information, and determine a fitness regimen based on a result of the analysis. Optionally, the target exercise duration is a number of days during which the user plans to exercise, e.g., 30 days. The health condition information may include information such as a history of severe diseases or any surgery within N days prior to the exercise.

In one example, the user's body weight is 60 kg, and the target body weight is 50 kg. In one example, the terminal device determines a fitness regimen as follows: a target exercise duration of 30 days, in each day the user is scheduled to exercise on the exercise equipment (e.g., cycling) for 5000 meters on a downhill riding condition with a slope gradient of 20 degree, 5000 meters on a flat surface riding condition, and 3000 meters on an uphill riding condition.

Referring to FIG. 4, the method in some embodiments further includes generating (by the terminal device) a control parameter for controlling the actuator based on the simulation parameter. The terminal device is configured to receive an input including a simulation parameter for simulating environmental conditions for exercise, and generate a control parameter for controlling the actuator based on the simulation parameter. Optionally, the user inputs the simulation parameter based on the fitness regimen determined by the terminal device. Optionally, the user inputs the simulation parameter based on the user's own plan.

In some embodiments, the actuator includes an electric motor. The simulation parameter includes a road condition parameter for simulating one of a plurality of environmental conditions for exercise including an uphill riding condition, a downhill riding condition, and a flat surface riding condition. The control parameter includes a road condition control parameter for controlling the electric motor in a first operating state or in a second operating state. When the electric motor is in the second operating state, the control parameter further includes a first torque parameter or a second torque parameter. The second torque parameter is negatively correlated to the slope gradient parameter. The electric motor is driven by the driven wheel in the first operating state. The electric motor is capable of actively rotating thereby driving the driven wheel. For example, the road condition control parameter may be represented as Z, Z = Z1 when the road condition control parameter is used for controlling the electric motor to be in the first operating state; Z = Z2 when the road condition control parameter is used for controlling the electric motor to be in the second operating state. Optionally, the first torque parameter is represented as G, and the second torque parameter is represented as T.

In some embodiments, the terminal device receives an input indicating that the road condition parameter is Y1 for simulating an uphill riding condition. Based on the road condition parameter Y1, the terminal device generates a road condition control parameter Z1 for controlling the electric motor to be in the first operating state.

In some embodiments, the terminal device receives an input indicating that the road condition parameter is Y2 for simulating a flat surface riding condition. Based on the road condition parameter Y2, the terminal device generates a road condition control parameter Z2 and a first torque parameter G for controlling the electric motor to be in the second operating state. Optionally, G is a constant having a value less than a threshold value.

In some embodiments, the terminal device receives an input indicating that the road condition parameter is Y3 and the slope gradient parameter is A for simulating a downhill riding condition. Based on the road condition parameter Y3, the terminal device generates a road condition control parameter Z2. Based on the slope gradient parameter A, the terminal device generates a second torque parameter T. Based on the road condition control parameter Z2, the terminal device is configured to control the electric motor to be in the second operating state. The second torque parameter T is negatively correlated to the slope gradient parameter A.

Optionally, the terminal device is configured to generate the second torque parameter T based on the slope gradient parameter A and a formula $T=\Psi/A$; wherein T is the second torque parameter, A is the slope gradient parameter, and $\Psi$ is a coefficient.

Optionally, the terminal device is configured to store correspondence between the simulation parameters and the control parameters, and determine the control parameter based on the user input of simulation parameters and the correspondence between the simulation parameters and the control parameters. In one example, the correspondence between the simulation parameters and the control parameters may be represented in a correspondence table. An exemplary correspondence table is shown in Table 1.

Table 1

| Simulation parameters | | Control parameters | |
|---|---|---|---|
| Road condition parameters | Slope gradient parameters | Road condition control parameters | Torque parameters |
| Y1 | - | Z1 | - |
| Y2 | - | Z2 | G |
| Y3 | A | Z3 | $T=\Psi/A$ |

As shown in Table 1, the road condition parameter Y1 corresponds to the road condition control parameter Z1;

the road condition parameter Y2 corresponds to the road condition control parameter Z2 and the first torque parameter G; and the road condition parameter Y3 corresponds to the road condition control parameter Z3 and the second torque parameter T, wherein T=$\Psi$/A. In one example, when the user inputs a simulation parameter Y1, the terminal device determines the road condition control parameter to be Z1 based on the correspondence table as shown in Table 1.

Referring to FIG. 4, the method in some embodiments further includes displaying (by the terminal device) at least one virtual reality environment options. The terminal device is configured to include a user interface for displaying at least one virtual reality environment options, each of the at least one virtual reality environment options corresponding to a virtual reality environment. Examples of virtual reality environments include, but are not limited to, a mountain biking scene, a beach biking scene, and a field biking scene.

Optionally, the virtual reality environment options, the simulation parameter, the target exercise distance, and the target body weight may be inputted in separate user interfaces. Optionally, the virtual reality environment options, the simulation parameter, the target exercise distance, and the target body weight may be inputted in a single user interface. Optionally, when the virtual reality environment options, the simulation parameter, the target exercise distance, and the target body weight are inputted in a single user interface, the corresponding method steps may be combined into one single step. For example, the step of receiving an input including a simulation parameter for simulating environmental conditions for exercise, the step of receiving an input indicating a target exercise distance, the step of receiving an input indicating a target body weight, and the step of displaying at least one virtual reality environment options may be conducted in a single user interface in a single step.

Referring to FIG. 4, the method in some embodiments further includes receiving (by the terminal device) an input indicating that one of the at least one virtual reality environment options is selected as a target virtual reality environment option. When the terminal device displays the virtual reality environment options, a user may select a target virtual reality environment option out of the displayed virtual reality environment options, and the terminal device is configured to receive the target virtual reality environment option.

Referring to FIG. 4, the method in some embodiments further includes selecting (by the terminal device) a virtual reality environment corresponding to the target virtual reality environment option as a target virtual reality environment. Once the terminal device receives the target virtual reality environment option, it is configured to select a virtual reality environment corresponding to the target virtual reality environment option as a target virtual reality environment. In one example, the terminal device selects a mountain biking scene as the target virtual reality environment.

Referring to FIG. 4, the method in some embodiments further includes transmitting (by the terminal device) a signal to a virtual reality device for displaying the target virtual reality environment corresponding to the target virtual reality environment option. Once the terminal device selects a target virtual reality environment, it is configured to transmit the signal to the virtual reality device for displaying the target virtual reality environment.

Referring to FIG. 4, the method in some embodiments further includes displaying (by the virtual reality device) the target virtual reality environment. When the terminal device transmits the signal for displaying the target virtual reality environment to the virtual reality device, the virtual reality device is configured to receive the signal and display the virtual reality environment. In one example, the virtual reality device is configured to display a mountain biking scene.

Examples of virtual reality devices include, but are not limited to, a virtual reality headset, a virtual reality helmet, and virtual reality glasses. The virtual reality device is in communicatively connection with the terminal device. The virtual reality helmet and the virtual reality glasses may be worn at a position where the displayed contents may be visually detected by the user. The virtual reality environment can be perceived by the user when the user is wearing the virtual reality device. In such a simulated environment, the user can enjoy the outdoor exercising fun while staying indoors.

Referring to FIG. 4, the method in some embodiments further includes controlling (by the terminal device) the actuator to actuate the driving force applied to the driven wheel based on the control parameter. After the terminal device generates the control parameter, the terminal device is configured to control the actuator to actuate the driving force applied to the driven wheel based on the control parameter.

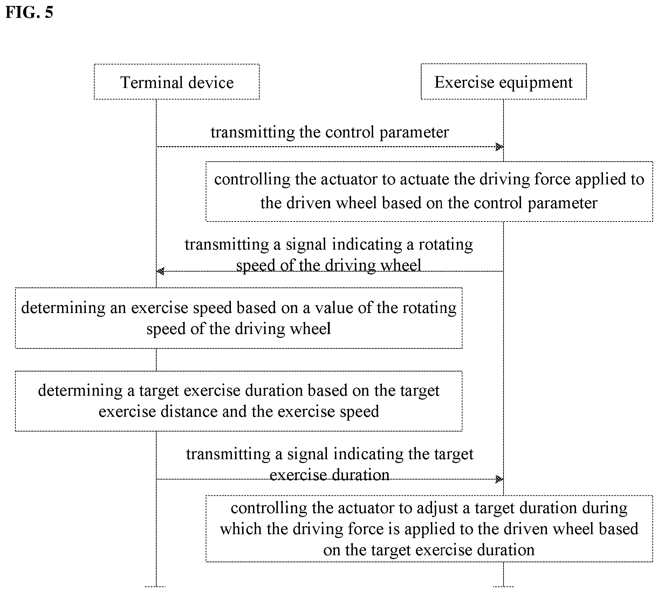

FIG. 5 is a flow chart illustrating a method implemented in an apparatus for controlling the actuator to actuate the driving force applied to the driven wheel based on the control parameter in some embodiments according to the present disclosure. Referring to FIG. 5, the method in some embodiments includes transmitting the control parameter from the terminal device to the exercise equipment. Once the terminal device generates the control parameter, it is configured to transmit the control parameter to the exercise equipment. In some embodiments, the exercise equipment includes a communication block. The terminal device is configured to transmit the control parameter to the communication block of the exercise equipment.

Referring to FIG. 5, the method in some embodiments includes controlling (by the exercise equipment) the actuator to actuate the driving force applied to the driven wheel based on the control parameter. The terminal device transmits the control parameter to the exercise equipment, the exercise equipment is configured to receive the control parameter, and control the actuator to actuate the driving force applied to the driven wheel based on the control parameter. Optionally, the actuator includes an electric motor.

In some embodiments, the control parameter includes a road condition control parameter, and the road condition control parameter is one that controls the electric motor to be in the first operating state. The exercise equipment is configured to control the electric motor to in the first operating state based on the road condition control parameter. In one example, the control parameter includes a road condition control parameter Z1, and the exercise equipment is configured to control the electric motor to in the first operating state based on the road condition control parameter Z1.

In some embodiments, the control parameter includes a road condition control parameter and a first torque parameter. The road condition control parameter is one that controls the electric motor to be in the second operating state. The exercise equipment is configured to control the electric motor to in the second operating state based on the road condition control parameter, and control the electric motor to actuate the driving force applied to the driven wheel based on the first torque parameter. In one example, the control parameter includes a road condition control parameter Z2 and a first torque parameter G. The exercise equipment is configured to control the electric motor to in the second operating state based on the road condition control parameter Z2, and control the electric motor to actuate the torque of the electric motor to be substantially the same as the first torque parameter G.

In some embodiments, the control parameter includes a road condition control parameter and a second torque parameter. The road condition control parameter is one that controls the electric motor to be in the second operating state. The exercise equipment is configured to control the electric motor to in the second operating state based on the road condition control parameter, and control the electric motor to actuate the driving force applied to the driven wheel based on the second torque parameter. In one example, the control parameter includes a road condition control parameter Z3 and a second torque parameter T. The exercise equipment is configured to control the electric motor to in the second operating state based on the road condition control parameter Z3, and control the electric motor to actuate the torque of the electric motor to be substantially the same as the second torque parameter T.

Optionally, the electric motor includes a controller for controlling the driving force applied to the driven wheel based on the control parameter. Optionally, the controller is built-in to the electric motor.

Referring to FIG. 5, the method in some embodiments includes transmitting a signal indicating a rotating speed of the driving wheel from the exercise equipment to the terminal device. The exercise equipment in some embodiments further includes a rotating speed measurement device. During the exercise process, the rotating speed measurement device is configured to measure a real-time rotating speed of the driving wheel, and configured to transmit a value of the measured rotating speed to the terminal device through the communication block. Optionally, the rotating speed measurement device is disposed on the driving wheel. Optionally, the rotating speed measurement device includes a speed sensor.

Referring to FIG. 5, the method in some embodiments includes determining (by the terminal device) an exercise speed based on a value of the rotating speed of the driving wheel. When the exercise equipment transmits the signal indicating a rotating speed of the driving wheel to the terminal device, the terminal device is configured to receive the signal indicating the rotating speed of the driving wheel, and determine the exercise speed based on the value of the rotating speed of the driving wheel.

In some embodiments, the terminal device stores a formula for converting between the rotating speed and the exercise speed. Upon receiving the signal indicating the rotating speed of the driving wheel, the terminal device is configured to determine the exercise speed based on the value of the rotating speed of the driving wheel and the conversion formula. Optionally, the conversion formula may be expressed as V = R x d, wherein V stands for the exercise speed (m/s), R stands for the rotating speed (m/s), and d stands for a riding distance (m) of one turn of the driving wheel. For a same exercise equipment (e.g., an exercise cycling machine), d is a constant. Thus, the terminal device can determine the exercise speed based on the value of the rotating speed of the driving wheel and the conversion formula $V = R \times d$.

Referring to FIG. 5, the method in some embodiments includes determining (by the terminal device) a target exercise duration based on the target exercise distance and the exercise speed. After the terminal device determines the exercise speed of the user, it is configured to determine the target exercise duration based on the target exercise distance and the exercise speed.

In some embodiments, the terminal device stores a formula for converting between target exercise duration from the target exercise distance and the exercise speed. Upon receiving a user input indicating the target exercise distance and determining the exercise speed, the terminal device is configured to determine the target exercise duration based on the target exercise distance, the exercise speed, and the conversion formula. Optionally, the conversion formula may be expressed as S = V x T, wherein S stands for the target exercise distance (m), V stands for the exercise speed (m/s), and T stands for the target exercise duration (s). Thus, the terminal device can determine the target exercise duration based on the target exercise distance, the exercise speed, and the conversion formula S = V x T.

Referring to FIG. 5, the method in some embodiments includes transmitting a signal indicating the target exercise duration from the terminal device to the exercise equipment. Once the terminal device determines the target exercise duration, it is configured to transmit a signal indicating the target exercise duration to the exercise equipment. Optionally, the terminal device is configured to transmit a signal indicating the target exercise duration to the exercise equipment through the communication block.

Referring to FIG. 5, the method in some embodiments includes controlling (by the exercise equipment) the actuator to adjust a target duration during which the driving force is applied to the driven wheel based on the target exercise duration. When the terminal device transmits the signal indicating the target exercise duration to the exercise equipment, the exercise equipment is configured to receive the signal indicating the target exercise duration, and control the actuator to adjust a target duration during which the driving force is applied to the driven wheel based on the target exercise duration. In one example, the exercise equipment is configured to control the actuator to adjust a target duration during which the driving force is applied to the driven wheel based on a target exercise duration T. Optionally, the exercise equipment includes a controller, and the controller is configured to control the actuator to adjust a target duration during which the driving force is applied to the driven wheel based on a target exercise duration.

In some embodiments, the step of transmitting a signal indicating a rotating speed of the driving wheel, the step of determining an exercise speed based on a value of the rotating speed of the driving wheel, the step of determining a target exercise duration based on the target exercise distance and the exercise speed, the step of transmitting a signal indicating the target exercise duration, and the step of controlling the actuator to adjust a target duration during which the driving force is applied to the driven wheel based on the target exercise duration are performed in real time. For example, the exercise equipment measures the rotating speed of the driving wheel in real time, and transmits the signal indicating the rotating speed of the driving wheel to the terminal device in real time. The terminal device determines, in real time, the exercise speed based on the value of the rotating speed of the driving wheel received in real time received from the exercise equipment. The terminal device transmits, in real time, the signal indicating the target exercise duration to the exercise equipment. The exercise equipment controls, in real time, the actuator to adjust a target duration during which the driving force is applied to the driven wheel based on the target exercise duration received from the terminal device.

Referring to FIG. 4 again, the method in some embodiments further includes determining (by the terminal device) one or both of a target amount of calories-burned and a target amount of sweat-generated based on the simulation parameter and the target exercise distance.

In some embodiments, the terminal device stores a first formula for calculating the amount of calories-burned and a second formula for calculating the amount of sweat-generated. The first and the second formulas take the simulation parameter and the target exercise distance as inputs for calculating the amount of calories-burned and the amount of sweat-generated, respectively. The terminal device is configured to calculate the amount of calories-burned using the first formula and using the simulation parameter and the target exercise distance as inputs. The terminal device is configured to calculate the amount of sweat-generated using the second formula and using the simulation parameter and the target exercise distance as inputs.

In some embodiments, the terminal device calculates the amount of calories-burned and the amount of sweat-generated, respectively, using the target exercise duration, the exercise speed, the simulation parameter and the target exercise distance as inputs. Optionally, the terminal device is configured to analyze the target exercise duration, the exercise speed, the simulation parameter and the target exercise distance, and calculate the amount of calories-burned and the amount of sweat-generated based on a result of the analysis.

Referring to FIG. 4 again, the method in some embodiments further includes generating (by the terminal device) an exercise summary based on one or both of the target amount of calories-burned and the target amount of sweat-generated. Upon determining the amount of calories-burned and the amount of sweat-generated, the terminal device is configured to generate the exercise summary based on one or both of the target amount of calories-burned and the target amount of sweat-generated.

Referring to FIG. 4 again, the method in some embodiments further includes displaying (by the terminal device) the exercise summary. After the exercise summary is generated, the terminal device is configured to display the exercise summary, e.g., to a user.

Referring to FIG. 4 again, the method in some embodiments further includes updating the fitness regimen based on the body weight of the user, the target body weight, and the exercise summary. After the exercise summary is generated, the terminal device is configured to update the fitness regimen based on the body weight of the user, the target body weight, and the exercise summary. In one example, the terminal device is configured to evaluate whether the user in the present exercise has reached a target fitness goal. If the user has not reached a target fitness goal in the present exercise, the terminal device is configured to increase the exercise intensity for future exercises, and update the fitness regimen accordingly.

In the present method for simulating an exercise environment in an exercise equipment, the terminal device is capable of controlling the actuator to actuate the driving force applied to the driven wheel based on a control parameter. Because the driven wheel is coupled with the driving wheel, the actuator is also capable of actuating the driving force applied to the driving wheel indirectly. In the present method, a user may conveniently adjust a level of exercise intensity on an individual basis according to the user's fitness needs. As compared to the conventional exercise equipment that has limited functions and cannot be personalized, the present exercise equipment has enriched functionalities that can easily meet the user's fitness needs on an individualized level.

Moreover, in an exercise equipment assembly having the present method implemented, the virtual reality device is capable of displaying the target virtual reality environment. While the user is exercising on the exercise equipment assembly, the user may experience an outdoor exercising environment through the virtual reality device. In such a simulated environment, the user can enjoy the outdoor exercising fun while staying indoors.

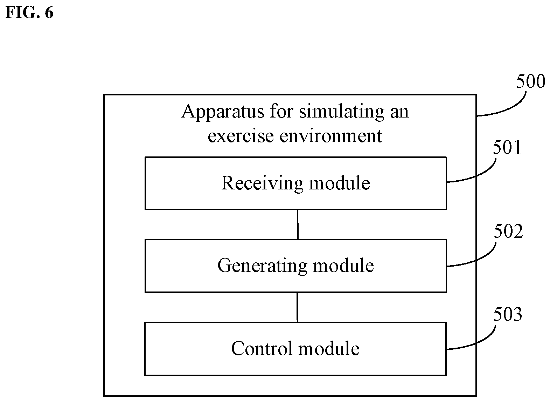

In another aspect, the present disclosure provides an apparatus for simulating an exercise environment in an exercise equipment. FIG. 6 is a schematic diagram illustrating the structure of an apparatus for simulating an exercise environment in an exercise equipment in some embodiments according to the present disclosure. The apparatus 500 may be incorporated into an exercise equipment assembly described herein (e.g., an exercise equipment assembly as shown in FIG. 2) in a form of hardware, in a form of software, or in a form of a combination of hardware and software. In some embodiments, the exercise equipment assembly includes an exercise equipment (e.g., an exercise equipment as shown in FIG. 1) and a virtual reality device. Optionally, the exercise equipment includes a main body; a transmission; a driving wheel rotatably mounted on the main body; a driven wheel rotatably mounted on the main body and operatively coupled to the driving wheel through the transmission; and an actuator configured to actuate a driving force applied to the driven wheel. Optionally, the exercise equipment further includes a controller (e.g., a controller built-in to the actuator); and a communication block, the controller and the communication block being communicatively connected with each other.

Referring to FIG. 6, the apparatus 500 for simulating an exercise environment in some embodiments includes a receiving module 501, a generating module 502, and a control module 503. The receiving module 501 is configured to receive a user input indicating a simulation parameter. The generating module 502 is configured to generate a control parameter for controlling the actuator based on the simulation parameter. The control module 503 is configured to control the actuator to actuate the driving force applied to the driven wheel based on the control parameter.

In the present apparatus for simulating an exercise environment in an exercise equipment, the apparatus is capable of controlling the actuator to actuate the driving force applied to the driven wheel based on a control parameter. Because the driven wheel is coupled with the driving wheel, the actuator is also capable of actuating the driving force applied to the driving wheel indirectly. Using the present apparatus, a user may conveniently adjust a level of exercise intensity on an individual basis according to the user's fitness needs. As compared to the conventional exercise equipment that has limited functions and cannot be personalized, the exercise equipment controlled by the present apparatus for simulating an exercise environment has enriched functionalities that can easily meet the user's fitness needs on an individualized level.

In some embodiments, the apparatus for simulating an exercise environment includes a memory; and one or more processors. The memory and the at least one processor are communicatively connected with each other. The memory stores computer-executable instructions for controlling the one or more processors to receive an input including a simulation parameter for simulating environmental conditions for exercise; generate a control parameter for controlling the actuator based on the simulation parameter; and transmit the control parameter to the communication block. Optionally, the communication block is configured to receive the control parameter from the apparatus for simulating the exercise environment and configured to transmit the control parameter to the controller. The controller is configured to control the actuator to actuate the driving force applied to the driven wheel based on the control parameter received from the communication block.

In some embodiments, the apparatus further includes a virtual reality device. Optionally, the memory stores computer-executable instructions for controlling the one or more processors to display at least one virtual reality environment options; receive an input indicating one of the at least one virtual reality environment options as a target virtual reality environment option; and transmit a signal to the virtual reality device for displaying a target virtual reality environment corresponding to the selected virtual reality environment option. The virtual reality device is configured to display the target virtual reality environment.

In some embodiments, the memory stores computer-executable instructions for controlling the one or more processors to receive a signal from the communication block indicating a pressure applied to the exercise equipment by a user; determine a body weight of the user based on the pressure; receive an input indicating a target body weight; and determine a fitness regimen based on the body weight and the target body weight.

In some embodiments, the memory stores computer-executable instructions for controlling the one or more processors to receive an input indicating a target exercise distance; determine one or both of a target amount of calories-burned and a target amount of sweat-generated based on the simulation parameter and the target exercise distance; generate an exercise summary based on one or both of the target amount of calories-burned and the target amount of sweat-generated; and display the exercise summary.

In some embodiments, the memory stores computer-executable instructions for controlling the one or more processors to receive a signal from the communication block indicating a rotating speed of the driving wheel; determine an exercise speed based on a value of the rotating speed of the driving wheel; determine a target exercise duration based on the target exercise distance and the exercise speed; and transmit a signal indicating the target exercise duration to the communication block. Optionally, the communication block is configured to receive the signal indicating the target exercise duration from the apparatus for simulating the exercise environment and configured to transmit the signal indicating the target exercise duration to the controller. Optionally, the controller is configured to control the actuator to adjust a target duration during which the driving force is applied to the driven wheel based on the target exercise duration received from the communication block.

In some embodiments, the actuator includes an electric motor. Optionally, the simulation parameter includes a road condition parameter for simulating one of a plurality of environmental conditions for exercise including an uphill riding condition, a downhill riding condition, and a flat surface riding condition, and the control parameter includes a road condition control parameter for controlling the electric motor in a first operating state or in a second operating state, the electric motor being driven by the driven wheel in the first operating state, the electric motor capable of actively rotating thereby driving the driven wheel. Optionally, the memory stores computer-executable instructions for controlling the one or more processors to receive a first input including a first road condition parameter for simulating the uphill riding condition; and generate a first road condition control parameter based on the first road condition parameter for controlling the electric motor in the first operating state. Optionally, the memory stores computer-executable instructions for controlling the one or more processors to receive a second input including a second road condition parameter for simulating the flat surface riding condition; and generate a second road condition control parameter and a first torque parameter based on the first road condition parameter for controlling the electric motor in the second operating state, the first torque parameter having a value less than a threshold value. Optionally, the memory stores computer-executable instructions for controlling the one or more processors to receive a third input including a third road condition parameter and a slope gradient parameter for simulating the downhill riding condition; and generate a third road condition control parameter based on the third road condition parameter and a second torque parameter based on the slope gradient parameter for controlling the electric motor in the second operating state, the second torque parameter being negatively correlated to the slope gradient parameter.

In some embodiments, the memory stores computer-executable instructions for controlling the one or more processors to generate the second torque parameter based on the slope gradient parameter according to an equation $T=\Psi/A$; wherein T is the second torque parameter, A is the slope gradient parameter, and $\Psi$ is a coefficient.

In some embodiments, the controller is configured to control the actuator to actuate the driving force applied to the driven wheel based on the control parameter received from the communication block. Optionally, the controller is configured to control the electric motor to be in the first operating state thereby actuating the driving force applied to the driven wheel, when an input including the first road condition parameter is received by the apparatus for simulating the exercise environment. Optionally, the controller is configured to control the electric motor to be in the second operating state, and actuate the driving force applied to the driven wheel based on the first torque parameter, when an input including the second road condition parameter is received by the apparatus for simulating the exercise environment. Optionally, the controller is configured to control the electric motor to be in the second operating state, and actuate the driving force applied to the driven wheel based on the second torque parameter, when an input including the third road condition parameter is received by the apparatus for simulating the exercise environment.

The foregoing description of the embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive.

**Claims**

1. An exercise equipment assembly (0), comprising:

>an exercise equipment (01);
>a terminal device (02); and
>a virtual reality device (03);
>the exercise equipment (01) comprising:

>>a main body (011);
>>a transmission (015);
>>a driving wheel (012) rotatably mounted on the main body (011);
>>a driven wheel (013) rotatably mounted on the main body (011) and operatively coupled to the driving wheel (012) through the transmission (015);
>>an actuator (014) configured to actuate a driving force applied to the driven wheel (013);
>>a controller (017);

>wherein the controller (017) is configured to control the actuator (014) to actuate the driving force applied to the driven wheel (013) based on a control parameter;

a biometric collector (019) configured to collect a biometric signal of a user, the biometric signal includes a palmprint signal or a fingerprint signal, and configured to transmit the biometric signal to the terminal device (02) to verify the identity of the user, the biometric collector (019) is disposed on the handlebar system (020), and the virtual reality device (03) is virtual reality glasses configured to display a target virtual reality environment, and the terminal device (02) is configured to transmit a signal to the virtual reality device (03) for displaying the target virtual reality environment corresponding to a target virtual reality environment option;
wherein the terminal device (02) is also configured to determine a body weight of the user based on the pressure applied to the exercise equipment (01), and determine a fitness regimen based on the body weight.

2. The exercise equipment assembly (0) of claim 1, wherein, the exercise equipment (01) further comprising:

a communication block (018);
wherein the controller (017) and the communication block (018) are communicatively connected with each other;
the communication block (018) is configured to receive the control parameter from a terminal device (02) and configured to transmit the control parameter to the controller (017); and
the controller (017) is configured to control the actuator (014) to actuate the driving force applied to the driven wheel (013) based on the control parameter received from the communication block (018).

3. The exercise equipment assembly (0) of claim 2, wherein, the exercise equipment (01) further comprising:

the biometric collector (019) being communicatively connected with the communication block (018);
wherein the biometric collector (019) is configured to transmit the biometric signal to the terminal device (02) through the communication block (018).

4. The exercise equipment assembly (0) of claim 3, wherein, the exercise equipment (01) further comprising:

a pressure measurement device (021) being communicatively connected with the communication block (018);
wherein the pressure measurement device (021) is configured to measure a pressure applied to the exercise equipment (01), and configured to transmit a value of the pressure to the terminal device (02) through the communication block (018).

5. The exercise equipment assembly (0) of claim 4, wherein, the exercise equipment (01) further comprising:

a seat system (022) attached to the main body (011);
wherein the pressure measurement device (021) is disposed on the seat system (022);
preferably, the exercise equipment (01) further comprising:

a base (016);
a handlebar system (020); and
a first crank (024), a second crank (024), and an axle shaft;
wherein the actuator (014) comprises an electric motor;
the main body (011) has an arch shape structure having a first end and a second end;
a first side of the first end is securely attached to a first side of the base (016), the first side of the base (016) being co-planar with a planar surface tangent to the first side of the first end;
the main body (011) comprises a first mount (0111) for securely mounting the driving wheel (012) on the main body (011), the first mount (0111) being on a second side of the first end opposite to the first side of the first end;
the main body (011) comprises a second mount (0112) for securely mounting the seat system (022) on the main body (011), the second mount (0112) being on a first side of the second end;
the main body (011) comprises a third mount (0113) for securely mounting the handlebar system (020) on the main body (011), the third mount (0113) being between the first mount (0111) and the second mount (0112);
the base (016) comprises a fourth mount (0161) for securely mounting the electric motor on the base (016);
the first crank (024) and the second crank (024) respectively attached to a first end and a second end of the axle shaft; and
the first crank (024) and the second crank (024) coupled with the driving wheel (012) through the axle shaft;

preferably, the exercise equipment (01) further comprising a fifth mount (025) for mounting a terminal device (02) on the handlebar system (020);

preferably, the first mount (0111), the second mount (0112), and the third mount (0113) are integral with the main body (011);

the fourth mount (0161) is integral with the base (016); and

the fifth mount (025) is integral with the handlebar system (020).

6. The exercise equipment assembly (0) of claim 2, wherein, the exercise equipment (01) further comprising:

a rotating speed measurement device (023) being communicatively connected with the communication block (018);

wherein the rotating speed measurement device (023) is configured to measure a rotating speed of the driving wheel (012), and configured to transmit a value of the rotating speed to the terminal device (02) through the communication block (018); and

the controller (017) is configured to control the actuator (014) to adjust a target duration during which the driving force is applied to the driven wheel (013) based on the target exercise duration received from the communication block (018).

7. The exercise equipment assembly (0) of claim 6, wherein the terminal device (02) is configured to:

display at least one virtual reality environment options;

receive an input indicating one of the at least one virtual reality environment options as a target virtual reality environment option.

8. The exercise equipment assembly (0) of claim 2, further comprising: an apparatus (500) for simulating an exercise environment in the exercise equipment (01),

wherein the apparatus (500) for simulating the exercise environment comprises:

a memory; and

one or more processors;

wherein the memory and the at least one processor are communicatively connected with each other;

the memory stores computer-executable instructions for controlling the one or more processors to:

receive an input comprising a simulation parameter for simulating environmental conditions for exercise;

generate a control parameter for controlling the actuator (014) based on the simulation parameter; and

transmit the control parameter to the communication block (018);

wherein the communication block (018) is configured to receive the control parameter from the apparatus (500) for simulating the exercise environment and configured to transmit the control parameter to the controller (017); and

the controller (017) is configured to control the actuator (014) to actuate the driving force applied to the driven wheel (013) based on the control parameter received from the communication block (018).

9. The exercise equipment assembly (0) of claim 8,

wherein the memory stores computer-executable instructions for controlling the one or more processors to:

display at least one virtual reality environment options;

receive an input indicating one of the at least one virtual reality environment options as a target virtual reality environment option; and

transmit a signal to the virtual reality device (03) for displaying a target virtual reality environment corresponding to the selected virtual reality environment option;

and

the virtual reality device (03) is configured to display the target virtual reality environment.

10. The exercise equipment assembly (0) of claim 8,

wherein the memory stores computer-executable instructions for controlling the one or more processors to:

receive a signal from the communication block (018) indicating a pressure applied to the exercise equipment (01) by a user;

determine a body weight of the user based on the pressure;
receive an input indicating a target body weight; and
determine a fitness regimen based on the body weight and the target body weight.

11. The exercise equipment assembly (0) of claim 10,
wherein the memory stores computer-executable instructions for controlling the one or more processors to:

receive an input indicating a target exercise distance;
determine one or both of a target amount of calories-burned and a target amount of sweat-generated based on the simulation parameter and the target exercise distance;
generate an exercise summary based on one or both of the target amount of calories-burned and the target amount of sweat-generated; and
display the exercise summary.

12. The exercise equipment assembly (0) of claim 11,
wherein the memory stores computer-executable instructions for controlling the one or more processors to:

receive a signal from the communication block (018) indicating a rotating speed of the driving wheel (012);
determine an exercise speed based on a value of the rotating speed of the driving wheel (012);
determine a target exercise duration based on the target exercise distance and the exercise speed; and
transmit a signal indicating the target exercise duration to the communication block (018);
wherein the communication block (018) is configured to receive the signal indicating the target exercise duration from the apparatus (500) for simulating the exercise environment and configured to transmit the signal indicating the target exercise duration to the controller (017); and
the controller (017) is configured to control the actuator (014) to adjust a target duration during which the driving force is applied to the driven wheel (013) based on the target exercise duration received from the communication block (018).

13. The exercise equipment assembly (0) of claim 12,

wherein the actuator (014) comprises an electric motor;
the simulation parameter comprises a road condition parameter for simulating one of a plurality of environmental conditions for exercise comprising an uphill riding condition, a downhill riding condition, and a flat surface riding condition;
the control parameter comprises a road condition control parameter for controlling the electric motor in a first operating state or in a second operating state, the electric motor being driven by the driven wheel (013) in the first operating state, the electric motor capable of actively rotating thereby driving the driven wheel (013);
the memory stores computer-executable instructions for controlling the one or more processors to:

receive a first input comprising a first road condition parameter for simulating the uphill riding condition; and generate a first road condition control parameter based on the first road condition parameter for controlling the electric motor in the first operating state; or
receive a second input comprising a second road condition parameter for simulating the flat surface riding condition; and generate a second road condition control parameter and a first torque parameter based on the first road condition parameter for controlling the electric motor in the second operating state, the first torque parameter having a value less than a threshold value; or
receive a third input comprising a third road condition parameter and a slope gradient parameter for simulating the downhill riding condition; and generate a third road condition control parameter based on the third road condition parameter and a second torque parameter based on the slope gradient parameter for controlling the electric motor in the second operating state, the second torque parameter being negatively correlated to the slope gradient parameter;
preferably, the memory stores computer-executable instructions for controlling the one or more processors to generate the second torque parameter based on the slope gradient parameter according to the following equation:

$$T = \Psi/A;$$

wherein T is the second torque parameter, A is the slope gradient parameter, and Ψ is a coefficient; preferably, the controller (017) is configured to control the actuator (014) to actuate the driving force applied to the driven wheel (013) based on the control parameter received from the communication block (018); the controller (017) is configured to:

control the electric motor to be in the first operating state thereby actuating the driving force applied to the driven wheel (013), when an input comprising the first road condition parameter is received by the apparatus (500) for simulating the exercise environment; or
control the electric motor to be in the second operating state, and actuate the driving force applied to the driven wheel (013) based on the first torque parameter, when an input comprising the second road condition parameter is received by the apparatus (500) for simulating the exercise environment; or
control the electric motor to be in the second operating state, and actuate the driving force applied to the driven wheel (013) based on the second torque parameter, when an input comprising the third road condition parameter is received by the apparatus (500) for simulating the exercise environment.

**Patentansprüche**

1. Übungsausrüstungsanordnung (0), aufweisend:

eine Übungsausrüstung (01);
ein Endvorrichtung (02); und
eine Virtual-Reality-Vorrichtung (03);
wobei die Übungsausrüstung (01) aufweist:

einen Hauptkörper (011);
ein Getriebe (015);
ein Antriebsrad (012), das drehbar an dem Hauptkörper (011) angebracht ist;
ein angetriebenes Rad (013), das drehbar an dem Hauptkörper (011) angebracht ist und über das Getriebe (015) mit dem Antriebsrad (012) betriebsmäßig gekoppelt ist;
ein Stellglied (014), das konfiguriert ist, um eine Antriebskraft zu betätigen, die auf das angetriebene Rad (013) ausgeübt wird;
eine Steuereinrichtung (017);
wobei die Steuereinrichtung (017) konfiguriert ist, um das Stellglied (014) zu steuern, um die Antriebskraft, die auf das angetriebene Rad (013) ausgeübt wird, auf der Grundlage eines Steuerparameters zu betätigen;
einen biometrischen Sammler (019), der konfiguriert ist, um ein biometrisches Signal eines Benutzers zu sammeln, wobei das biometrische Signal ein Handabdrucksignal oder ein Fingerabdrucksignal umfasst, und konfiguriert ist, um das biometrische Signal an die Endvorrichtung (02) zu übertragen, um die Identität des Benutzers zu überprüfen, wobei der biometrische Sammler (019) an dem Lenkersystem (020) angeordnet ist, und
wobei die Virtual-Reality-Vorrichtung (03) eine Virtual-Reality-Brille ist, die konfiguriert ist, um eine Zielumgebung der virtuellen Realität anzuzeigen, und die Endvorrichtung (02) konfiguriert ist, um ein Signal an die Virtual-Reality-Vorrichtung (03) zu übertragen, um die Zielumgebung der virtuellen Realität entsprechend einer Virtual-Reality-Zielumgebungsoption anzuzeigen;
wobei die Endvorrichtung (02) auch konfiguriert ist, um auf der Grundlage des Drucks, der auf die Übungsausrüstung (01) ausgeübt wird, ein Körpergewicht des Benutzers zu bestimmen und auf der Grundlage des Körpergewichts ein Fitnessprogramm zu bestimmen.

2. Übungsausrüstungsanordnung (0) nach Anspruch 1, wobei die Übungsausrüstung (01) ferner aufweist:

einen Kommunikationsblock (018);
wobei die Steuereinrichtung (017) und der Kommunikationsblock (018) kommunikativ miteinander verbunden sind;
der Kommunikationsblock (018) konfiguriert ist, um den Steuerparameter von einer Endvorrichtung (02) zu empfangen und konfiguriert ist, um den Steuerparameter an die Steuereinrichtung (017) zu übertragen; und
die Steuereinrichtung (017) konfiguriert ist, um das Stellglied (014) zu steuern, um die Antriebskraft, die auf das angetriebene Rad (013) ausgeübt wird, auf der Grundlage des Steuerparameters, der von dem Kommunikationsblock (018) empfangen wird, zu betätigen.

3. Übungsausrüstungsanordnung (0) nach Anspruch 2, wobei die Übungsausrüstung (01) ferner aufweist:

den biometrischen Sammler (019), der kommunikativ mit dem Kommunikationsblock (018) verbunden ist; wobei der biometrische Sammler (019) konfiguriert ist, um das biometrische Signal über den Kommunikationsblock (018) an die Endvorrichtung (02) zu übertragen.

4. Übungsausrüstungsanordnung (0) nach Anspruch 3, wobei die Übungsausrüstung (01) ferner aufweist:

eine Druckmessvorrichtung (021), die kommunikativ mit dem Kommunikationsblock (018) verbunden ist; wobei die Druckmessvorrichtung (021) konfiguriert ist, um einen Druck, der auf die Übungsausrüstung (01) ausgeübt wird, zu messen und konfiguriert ist, um einen Wert des Drucks über den Kommunikationsblock (018) an die Endvorrichtung (02) zu übertragen.

5. Übungsausrüstungsanordnung (0) nach Anspruch 4, wobei die Übungsausrüstung (01) ferner aufweist:

ein Sitzsystem (022), das an dem Hauptkörper (011) angebracht ist; wobei die Druckmessvorrichtung (021) auf dem Sitzsystem (022) angeordnet ist; wobei die Übungsausrüstung (01) vorzugsweise ferner aufweist:

einen Sockel (016);
ein Lenkersystem (020); und
eine erste Kurbel (024), eine zweite Kurbel (024), und eine Achswelle;
wobei das Stellglied (014) einen Elektromotor aufweist;
der Hauptkörper (011) eine bogenförmige Struktur mit einem ersten Ende und einem zweiten Ende aufweist;
eine erste Seite des ersten Endes fest an einer ersten Seite des Sockels (016) angebracht ist, wobei die erste Seite des Sockels (016) koplanar mit einer ebenen Fläche ist, die die erste Seite des ersten Endes tangiert;
der Hauptkörper (011) eine erste Halterung (0111) zum sicheren Anbringen des Antriebsrads (012) an dem Hauptkörper (011) aufweist, wobei sich die erste Halterung (0111) auf einer zweiten Seite des ersten Endes gegenüber der ersten Seite des ersten Endes befindet;
der Hauptkörper (011) eine zweite Halterung (0112) zum sicheren Anbringen des Sitzsystems (022) an dem Hauptkörper (011) aufweist, wobei die zweite Halterung (0112) an einer ersten Seite des zweiten Endes angeordnet ist;
der Hauptkörper (011) eine dritte Halterung (0113) zum sicheren Anbringen des Lenkersystems (020) an dem Hauptkörper (011) aufweist, wobei sich die dritte Halterung (0113) zwischen der ersten Halterung (0111) und der zweiten Halterung (0112) befindet;
der Sockel (016) eine vierte Halterung (0161) zum sicheren Anbringen des Elektromotors an dem Sockel (016) aufweist;
die erste Kurbel (024) und die zweite Kurbel (024) jeweils an einem ersten Ende und einem zweiten Ende der Achswelle angebracht sind; und
die erste Kurbel (024) und die zweite Kurbel (024) über die Achswelle mit dem Antriebsrad (012) gekoppelt sind;
wobei die Übungsausrüstung (01) vorzugsweise ferner eine fünfte Halterung (025) zum Anbringen einer Endvorrichtung (02) an dem Lenkersystem (020) aufweist;
die erste Halterung (0111), die zweite Halterung (0112) und die dritte Halterung (0113) vorzugsweise mit dem Hauptkörper (011) einstückig sind;
die vierte Halterung (0161) mit dem Sockel (016) einstückig ist; und
die fünfte Halterung (025) mit dem Lenkersystem (020) einstückig ist.

6. Übungsausrüstungsanordnung (0) nach Anspruch 2, wobei die Übungsausrüstung (01) ferner aufweist:

eine Drehgeschwindigkeitsmessvorrichtung (023), die kommunikativ mit dem Kommunikationsblock (018) verbunden ist;
wobei die Drehgeschwindigkeitsmessvorrichtung (023) konfiguriert ist, um eine Drehgeschwindigkeit des Antriebsrads (012) zu messen und konfiguriert ist, um einen Wert der Drehgeschwindigkeit über den Kommunikationsblock (018) an die Endvorrichtung (02) zu übertragen; und
die Steuereinrichtung (017) konfiguriert ist, um das Stellglied (014) zu steuern, um eine Zieldauer, während der die Antriebskraft auf das angetriebene Rad (013) ausgeübt wird, auf der Grundlage der Zielübungsdauer, die von dem Kommunikationsblock (018) empfangen wird, einzustellen.

7. Übungsausrüstungsanordnung (0) nach Anspruch 6, wobei die Endvorrichtung (02) konfiguriert ist zum:

mindestens eine von Virtual-Reality-Umgebungsoptionen anzuzeigen;
eine Eingabe, die eine der mindestens einen Virtual-Reality-Umgebungsoptionen als eine Virtual-Reality-Zielumgebungsoption angibt, zu empfangen.

8. Übungsausrüstungsanordnung (0) nach Anspruch 2, ferner eine Vorrichtung (500) zum Simulieren einer Übungsumgebung in der Übungsausrüstung (01) aufweisend,
wobei die Vorrichtung (500) zum Simulieren der Übungsumgebung aufweist:

einen Speicher; und
einen oder mehrere Prozessoren;
wobei der Speicher und der mindestens eine Prozessor kommunikativ miteinander verbunden sind;
der Speicher computerausführbare Anweisungen zum Steuern des einen oder der mehreren Prozessoren speichert, um:

eine Eingabe, die einen Simulationsparameter zum Simulieren von Umgebungsbedingungen zur Übung aufweist, zu empfangen;
auf der Grundlage des Simulationsparameters einen Steuerparameter zum Steuern des Stellglieds (014) zu erzeugen; und
den Steuerparameter an den Kommunikationsblock (018) zu übertragen;
wobei der Kommunikationsblock (018) konfiguriert ist, um den Steuerparameter von der Vorrichtung (500) zum Simulieren der Übungsumgebung zu empfangen, und konfiguriert ist, um den Steuerparameter an die Steuereinrichtung (017) zu übertragen; und
die Steuereinrichtung (017) konfiguriert ist, um das Stellglied (014) zu steuern, um die Antriebskraft, die auf das angetriebene Rad (013) ausgeübt wird, auf der Grundlage des Steuerparameters, der von dem Kommunikationsblock (018) empfangen wird, zu betätigen.

9. Übungsausrüstungsanordnung (0) nach Anspruch 8, wobei der Speicher computerausführbare Anweisungen zum Steuern des einen oder der mehreren Prozessoren speichert, um:

mindestens eine von Virtual-Reality-Umgebungsoptionen anzuzeigen;
eine Eingabe, die eine der mindestens einen von Virtual-Reality-Umgebungsoptionen als eine Virtual-Reality-Zielumgebungsoption angibt, zu empfangen; und
ein Signal an die Virtual-Reality-Vorrichtung (03) zum Anzeigen einer Virtual-Reality-Zielumgebung, die der ausgewählten Virtual-Reality-Umgebungsoption entspricht, zu übertragen;
und
wobei die Virtual-Reality-Vorrichtung (03) konfiguriert ist, um die Virtual-Reality-Zielumgebung anzuzeigen.

10. Übungsausrüstungsanordnung (0) nach Anspruch 8,
wobei der Speicher computerausführbare Anweisungen zum Steuern des einen oder der mehreren Prozessoren speichert, um:

von dem Kommunikationsblock (018) ein Signal, das einen Druck anzeigt, der von einem Benutzer auf die Übungsausrüstung (01) ausgeübt wird, zu empfangen;
auf der Grundlage des Drucks ein Körpergewicht des Benutzers zu bestimmen;
eine Eingabe, die ein Zielkörpergewicht angibt, zu empfangen; und
auf der Grundlage des Körpergewichts und des Zielkörpergewichts ein Fitnessprogramm zu bestimmen.

11. Übungsausrüstungsanordnung (0) nach Anspruch 10,
wobei der Speicher computerausführbare Anweisungen zum Steuern des einen oder der mehreren Prozessoren speichert, um:

eine Eingabe, die eine Übungszielentfernung angibt, zu empfangen;
auf der Grundlage des Simulationsparameters und der Übungszielentfernung eine Zielmenge an verbrannten Kalorien und/oder eine Zielmenge an erzeugtem Schweiß zu bestimmen;

auf der Grundlage der Zielmenge an verbrannten Kalorien und/oder der Zielmenge an erzeugtem Schweiß eine Übungszusammenfassung zu erzeugen; und
die Übungszusammenfassung anzuzeigen.

12. Übungsausrüstungsanordnung (0) nach Anspruch 11, wobei der Speicher computerausführbare Anweisungen zum Steuern des einen oder der mehreren Prozessoren speichert, um:

von dem Kommunikationsblock (018) ein Signal, das eine Drehgeschwindigkeit des Antriebsrads (012) anzeigt, zu empfangen;
auf der Grundlage eines Wertes der Drehgeschwindigkeit des Antriebsrads (012) eine Übungsgeschwindigkeit zu bestimmen;
auf der Grundlage der Übungszielentfernung und der Übungsgeschwindigkeit eine Zielübungsdauer zu bestimmen; und
ein Signal, das die Zielübungsdauer anzeigt, an den Kommunikationsblock (018) zu übertragen;
wobei der Kommunikationsblock (018) konfiguriert ist, um das Signal, das die Zielübungsdauer anzeigt, von der Vorrichtung (500) zum Simulieren der Übungsumgebung zu empfangen, und konfiguriert ist, um das Signal, das die Zielübungsdauer anzeigt, an die Steuereinrichtung (017) zu übertragen; und
die Steuereinrichtung (017) konfiguriert ist, um das Stellglied (014) zu steuern, um eine Zieldauer, während der die Antriebskraft auf das angetriebene Rad (013) ausgeübt wird, auf der Grundlage der Zielübungsdauer, die von dem Kommunikationsblock (018) empfangen wird, einzustellen.

13. Übungsausrüstungsanordnung (0) nach Anspruch 12,

wobei das Stellglied (014) einen Elektromotor aufweist;
der Simulationsparameter einen Straßenbedingungsparameter zum Simulieren einer von mehreren Umgebungsbedingungen zur Übung aufweist, die eine Bergauffahrtbedingung, eine Bergabfahrtbedingung und eine Flachlandfahrtbedingung umfassen;
der Steuerparameter einen Straßenbedingungssteuerparameter zum Steuern des Elektromotors in einem ersten Betriebszustand oder in einem zweiten Betriebszustand aufweist, wobei der Elektromotor in dem ersten Betriebszustand durch das angetriebene Rad (013) angetrieben wird, wobei der Elektromotor in der Lage ist, sich aktiv zu drehen, so dass er dadurch das angetriebene Rad (013) antreibt;
der Speicher computerausführbare Anweisungen zum Steuern des einen oder der mehreren Prozessoren speichert, um:

eine erste Eingabe, die einen ersten Straßenbedingungsparameter zum Simulieren der Bergauffahrtbedingung aufweist, zu empfangen; und auf der Grundlage des ersten Straßenbedingungsparameters einen ersten Straßenbedingungssteuerparameter zum Steuern des Elektromotors in dem ersten Betriebszustand zu erzeugen; oder
eine zweite Eingabe, die einen zweiten Straßenbedingungsparameter zum Simulieren der Flachlandfahrtbedingung aufweist, zu empfangen; und auf der Grundlage des ersten Straßenbedingungsparameters zum Steuern des Elektromotors in dem zweiten Betriebszustand einen zweiten Straßenbedingungssteuerparameter und einen ersten Drehmomentparameter zu erzeugen, wobei der erste Drehmomentparameter einen Wert hat, der kleiner als ein Schwellenwert ist; oder
eine dritte Eingabe, die einen dritten Straßenbedingungsparameter und einen Hangneigungsparameter zum Simulieren der Bergabfahrtbedingung aufweist, zu empfangen; und auf der Grundlage des dritten Straßenbedingungsparameters einen dritten Straßenbedingungssteuerparameter und auf der Grundlage des Hangneigungsparameters einen zweiten Drehmomentparameter zum Steuern des Elektromotors in dem zweiten Betriebszustand zu erzeugen, wobei der zweite Drehmomentparameter mit dem Hangneigungsparameter negativ korreliert ist;
wobei der Speicher vorzugsweise computerausführbare Anweisungen zum Steuern des einen oder der mehreren Prozessoren speichert, um den zweiten Drehmomentparameter auf der Grundlage des Hangneigungsparameters gemäß der folgenden Gleichung zu erzeugen:

$$T=\Psi/A;$$

wobei T der zweite Drehmomentparameter ist, A der Hangneigungsparameter ist und Ψ ein Koeffizient ist; wobei die Steuereinrichtung (017) vorzugsweise konfiguriert ist, um das Stellglied (014) zu steuern, um die Antriebskraft, die auf das angetriebene Rad (013) ausgeübt wird, auf der Grundlage des Steuerparameters, der von dem Kommunikationsblock (018) empfangen wird, zu betätigen; die Steuereinrichtung (017) konfiguriert ist, um:

den Elektromotor so zu steuern, dass er sich in dem ersten Betriebszustand befindet, so dass er dadurch die Antriebskraft, die auf das angetriebene Rad (013) ausgeübt wird, betätigt, wenn eine Eingabe, die den ersten Straßenbedingungsparameter aufweist, von der Vorrichtung (500) zum Simulieren der Übungsumgebung empfangen wird; oder den Elektromotor so zu steuern, dass er sich in dem zweiten Betriebszustand befindet, und die Antriebskraft, die auf das angetriebene Rad (013) ausgeübt wird, auf der Grundlage des ersten Drehmomentparameters zu betätigen, wenn eine Eingabe, die den zweiten Straßenbedingungsparameter aufweist, von der Vorrichtung (500) zum Simulieren der Übungsumgebung empfangen wird; oder den Elektromotor so zu steuern, dass er sich in dem zweiten Betriebszustand befindet, und die Antriebskraft, die auf das angetriebene Rad (013) ausgeübt wird, auf der Grundlage des zweiten Drehmomentparameters zu betätigen, wenn eine Eingabe, die den dritten Straßenbedingungsparameter aufweist, von der Vorrichtung (500) zum Simulieren der Übungsumgebung empfangen wird.

## Revendications

1. Ensemble d'équipement d'exercice (0), comprenant :

un équipement d'exercice (01) ;
un terminal (02) ; et
un dispositif de réalité virtuelle (03) ;
l'équipement d'exercice (01) comprenant :

un corps principal (011) ;
une transmission (015) ;
une roue d'entraînement (012) montée rotative sur le corps principal (011) ;
une roue entraînée (013) montée rotative sur le corps principal (011) et couplé de manière fonctionnelle à la roue d'entraînement (012) par l'intermédiaire de la transmission (015) ;
un actionneur (014) configuré pour actionner une force d'entraînement appliquée à la roue d'entraînement (013) ;
un contrôleur (017) ;
dans lequel le contrôleur (017) est configuré pour commander l'actionneur (014) pour actionner la force d'entraînement appliquée à la roue entraînée (013) sur la base d'un paramètre de commande ;
un collecteur biométrique (019) configuré pour collecter un signal biométrique d'un utilisateur, le signal biométrique comprend un signal d'empreinte palmaire ou un signal d'empreinte digitale, et configuré pour transmettre le signal biométrique au dispositif terminal (02) pour vérifier l'identité de l'utilisateur, le collecteur biométrique (019) est disposé sur le système de guidon (020), et
le dispositif de réalité virtuelle (03) est constitué de lunettes de réalité virtuelle configurées pour afficher un environnement de réalité virtuelle cible, et le dispositif terminal (02) est configuré pour transmettre un signal au dispositif de réalité virtuelle (03) pour afficher l'environnement de réalité virtuelle cible correspondant à une option d'environnement de réalité virtuelle cible ;
dans lequel le dispositif terminal (02) est également configuré pour déterminer un poids corporel de l'utilisateur sur la base de la pression appliquée à l'équipement d'exercice (01), et
déterminer un régime de remise en forme en fonction du poids corporel.

**2.** Ensemble d'équipement d'exercice (0) selon la revendication 1, dans lequel l'équipement d'exercice (01) comprend en outre :

un bloc de communication (018) ;

dans lequel le contrôleur (017) et le bloc de communication (018) sont connectés en communication l'un avec l'autre ;

le bloc de communication (018) est configuré pour recevoir le paramètre de commande d'un dispositif terminal (02) et configuré pour transmettre le paramètre de commande au contrôleur (017) ; et

le contrôleur (017) est configuré pour commander l'actionneur (014) pour actionner la force d'entraînement appliquée à la roue entraînée (013) sur la base du paramètre de commande reçu du bloc de communication (018).

**3.** Ensemble d'équipement d'exercice (0) selon la revendication 2, dans lequel l'équipement d'exercice (01) comprend en outre :

le collecteur biométrique (019) qui est connecté en communication avec le bloc de communication (018) ;

dans lequel le collecteur biométrique (019) est configuré pour transmettre le signal biométrique au dispositif terminal (02) au moyen du bloc de communication (018).

**4.** Ensemble d'équipement d'exercice (0) selon la revendication 3, dans lequel l'équipement d'exercice (01) comprend en outre :

un dispositif de mesure de pression (021) qui est connecté en communication avec le bloc de communication (018) ;

dans lequel que le dispositif de mesure de pression (021) est configuré pour mesurer une pression appliquée à l'équipement d'exercice (01), et configuré pour transmettre une valeur de la pression au dispositif terminal (02) au moyen du bloc de communication (018).

**5.** Ensemble d'équipement d'exercice (0) selon la revendication 4, dans lequel l'équipement d'exercice (01) comprend en outre :

un système de siège (022) fixé au corps principal (011) ;

dans lequel le dispositif de mesure de pression (021) est disposé sur le système de siège (022) ;

de préférence, l'équipement d'exercice (01) comprenant en outre :

une base (016) ;

un système de guidon (020) ; et

une première manivelle (024), une deuxième manivelle (024) et un arbre d'essieu ;

dans lequel l'actionneur (014) comprend un moteur électrique ;

le corps principal (011) a une structure en forme d'arc ayant une première extrémité et une deuxième extrémité ;

un premier côté de la première extrémité est solidement fixé à un premier côté de la base (016), le premier côté de la base (016) étant coplanaire avec une surface plane tangente au premier côté de la première extrémité ;

le corps principal (011) comprend un premier support (0111) pour monter solidement la roue d'entraînement (012) sur le corps principal (011), le premier support (0111) étant sur un deuxième côté de la première extrémité opposé au premier côté de la première extrémité ;

le corps principal (011) comprend un deuxième support (0112) pour monter solidement le système de siège (022) sur le corps principal (011), le deuxième support (0112) étant sur un premier côté de la deuxième extrémité ;

le corps principal (011) comprend un troisième support (0113) pour monter solidement le système de guidon (020) sur le corps principal (011), le troisième support (0113) étant entre le premier support (0111) et le deuxième support (0112) ;

la base (016) comprend un quatrième support (0161) pour monter solidement le moteur électrique sur la base (016) ;

la première manivelle (024) et la deuxième manivelle (024) fixées respectivement à une première extrémité et à une deuxième extrémité de l'arbre d'essieu ; et

la première manivelle (024) et la deuxième manivelle (024) couplées à la roue d'entraînement (012) par l'intermédiaire de l'arbre d'essieu ;

de préférence, l'équipement d'exercice (01) comprenant en outre un cinquième support (025) pour monter un dispositif terminal (02) sur le système de guidon (020) ;

de préférence, le premier support (0111), le deuxième support (0112) et le troisième support (0113) sont solidaires du corps principal (011) ;

le quatrième support (0161) est solidaire de la base (016) ; et

le cinquième support (025) est solidaire du système de guidon (020).

6. Ensemble d'équipement d'exercice (0) selon la revendication 2, dans lequel l'équipement d'exercice (01) comprend en outre :

un dispositif de mesure de vitesse de rotation (023) qui est connecté en communication avec le bloc de communication (018) ;

dans lequel le dispositif de mesure de vitesse de rotation (023) est configuré pour mesurer une vitesse de rotation de la roue d'entraînement (012), et configuré pour transmettre une valeur de la vitesse de rotation au dispositif terminal (02) au moyen du bloc de communication (018) ; et

le contrôleur (017) est configuré pour commander l'actionneur (014) pour ajuster une durée cible pendant laquelle la force d'entraînement est appliquée à la roue entraînée (013) sur la base de la durée d'exercice cible reçue du bloc de communication (018).

7. Ensemble d'équipement d'exercice (0) selon la revendication 6, dans lequel le dispositif terminal (02) est configuré pour :

afficher au moins une option d'environnement de réalité virtuelle ;

recevoir une entrée indiquant une desdites au moins une options d'environnement de réalité virtuelle en tant qu'option d'environnement de réalité virtuelle cible.

8. Ensemble d'équipement d'exercice (0) selon la revendication 2, comprenant en outre : un appareil (500) pour simuler un environnement d'exercice dans l'équipement d'exercice (01),

dans lequel l'appareil (500) pour simuler l'environnement d'exercice comprend :

une mémoire ; et

un ou plusieurs processeurs ;

dans lequel la mémoire et lesdits au moins un processeur sont connectés en communication l'un avec l'autre ;

la mémoire stocke des instructions exécutables par ordinateur pour commander lesdits un ou plusieurs processeurs pour :

recevoir une entrée comprenant un paramètre de simulation pour simuler des conditions environnementales pour l'exercice ;

générer un paramètre de commande pour commander l'actionneur (014) sur la base du paramètre de simulation ; et

transmettre le paramètre de commande au bloc de communication (018) ; dans lequel le bloc de communication (018) est configuré pour recevoir le paramètre de commande de l'appareil (500) pour simuler l'environnement d'exercice et configuré pour transmettre le paramètre de commande au contrôleur (017) ; et

le contrôleur (017) est configuré pour commander l'actionneur (014) pour actionner la force d'entraînement appliquée à la roue entraînée (013) sur la base du paramètre de commande reçu du bloc de communication (018).

9. Ensemble d'équipement d'exercice (0) selon la revendication 8,

dans lequel la mémoire stocke des instructions exécutables par ordinateur pour commander lesdits un ou plusieurs processeurs pour :

afficher au moins une option d'environnement de réalité virtuelle ;

recevoir une entrée indiquant l'une desdites au moins une option d'environnement de réalité virtuelle en tant qu'option d'environnement de réalité virtuelle cible ; et

transmettre un signal au dispositif de réalité virtuelle (03) pour afficher un environnement de réalité virtuelle cible correspondant à l'option d'environnement de réalité virtuelle sélectionnée ;

et

le dispositif de réalité virtuelle (03) est configuré pour afficher l'environnement de réalité virtuelle cible.

**10.** Ensemble d'équipement d'exercice (0) selon la revendication 8,
dans lequel la mémoire stocke des instructions exécutables par ordinateur pour commander lesdits un ou plusieurs processeurs pour :

recevoir un signal du bloc de communication (018) indiquant une pression appliquée à l'équipement d'exercice (01) par un utilisateur ;
déterminer un poids corporel de l'utilisateur sur la base de la pression ;
recevoir une entrée indiquant un poids corporel cible ; et
déterminer un régime de remise en forme en fonction du poids corporel et du poids corporel cible.

**11.** Ensemble d'équipement d'exercice (0) selon la revendication 10,
dans lequel la mémoire stocke des instructions exécutables par ordinateur pour commander lesdits un ou plusieurs processeurs pour :

recevoir une entrée indiquant une distance d'exercice cible ;
déterminer une ou les deux parmi une quantité cible de calories brûlées et une quantité cible de sueur générée sur la base du paramètre de simulation et de la distance d'exercice cible ;
générer un résumé d'exercice basé sur une ou sur les deux parmi la quantité cible de calories brûlées et la quantité cible de sueur générée ; et
afficher le résumé de l'exercice.

**12.** Ensemble d'équipement d'exercice (0) selon la revendication 11,
dans lequel la mémoire stocke des instructions exécutables par ordinateur pour commander lesdits un ou plusieurs processeurs pour :

recevoir un signal du bloc de communication (018) indiquant une vitesse de rotation de la roue d'entraînement (012) ;
déterminer une vitesse d'exercice sur la base d'une valeur de la vitesse de rotation de la roue d'entraînement (012) ;
déterminer une durée d'exercice cible sur la base de la distance d'exercice cible et de la vitesse d'exercice ; et
transmettre un signal indiquant la durée d'exercice cible au bloc de communication (018) ;
dans lequel le bloc de communication (018) est configuré pour recevoir le signal indiquant la durée d'exercice cible de l'appareil (500) pour simuler l'environnement d'exercice et configuré pour transmettre le signal indiquant la durée d'exercice cible au contrôleur (017) ; et
le contrôleur (017) est configuré pour commander l'actionneur (014) pour ajuster une durée cible pendant laquelle la force d'entraînement est appliquée à la roue entraînée (013) sur la base de la durée d'exercice cible reçue du bloc de communication (018).

**13.** Ensemble d'équipement d'exercice (0) selon la revendication 12,

dans lequel l'actionneur (014) comprend un moteur électrique ;
le paramètre de simulation comprend un paramètre d'état de la route pour simuler une condition parmi une pluralité de conditions environnementales pour l'exercice comprenant une condition de conduite en montée, une condition de conduite en descente et une condition de conduite sur surface plane ;
le paramètre de commande comprend un paramètre de commande d'état de la route pour commander le moteur électrique dans un premier état de fonctionnement ou dans un deuxième état de fonctionnement, le moteur électrique étant entraîné par la roue d'entraînement (013) dans le premier état de fonctionnement, le moteur électrique pouvant tourner entraînant ainsi la roue entraînée (013) ;
la mémoire stocke des instructions exécutables par ordinateur pour commander lesdits un ou plusieurs processeurs pour :

recevoir une première entrée comprenant un premier paramètre de condition de route pour simuler la condition de conduite en montée ; et générer un premier paramètre de commande d'état de la route sur la base du premier paramètre d'état de la route pour commander le moteur électrique dans le premier état de fonctionnement ; ou
recevoir une deuxième entrée comprenant un deuxième paramètre d'état de la route pour simuler l'état de conduite sur surface plane ; et générer un deuxième paramètre de commande d'état de la route et un premier paramètre de couple sur la base du premier paramètre d'état de la route pour commander le moteur électrique dans le deuxième état de fonctionnement, le premier paramètre de couple ayant une valeur inférieure à une valeur seuil ; ou

recevoir une troisième entrée comprenant un troisième paramètre de condition de route et un paramètre de gradient de pente pour simuler la condition de conduite en descente ; et générer un troisième paramètre de commande d'état de la route sur la base du troisième paramètre d'état de la route et un deuxième paramètre de couple sur la base du paramètre de gradient de pente pour commander le moteur électrique dans le deuxième état de fonctionnement, le deuxième paramètre de couple étant corrélé négativement au paramètre de gradient de pente ;

de préférence, la mémoire stocke des instructions exécutables par ordinateur pour commander lesdits un ou plusieurs processeurs pour générer le deuxième paramètre de couple sur la base du paramètre de gradient de pente selon l'équation suivante :

$$T = \Psi/A \; ;$$

dans lequel T est le deuxième paramètre de couple, A est le paramètre de gradient de pente et $\Psi$ est un coefficient ;

de préférence, le contrôleur (017) est configuré pour commander l'actionneur (014) pour actionner la force d'entraînement appliquée à la roue entraînée (013) en fonction du paramètre de commande reçu du bloc de communication (018) ; le contrôleur (017) est configuré pour :

commander le moteur électrique pour qu'il soit dans le premier état de fonctionnement, actionnant ainsi la force d'entraînement appliquée à la roue entraînée (013), lorsqu'une entrée comprenant le premier paramètre d'état de la route est reçue par l'appareil (500) pour simuler l'environnement d'exercice ; ou commander le moteur électrique pour qu'il soit dans le deuxième état de fonctionnement, et actionner la force d'entraînement appliquée à la roue d'entraînement (013) sur la base du premier paramètre de couple, lorsqu'une entrée comprenant le deuxième paramètre d'état de la route est reçue par l'appareil (500) pour simuler l'environnement d'exercice ; ou commander le moteur électrique pour qu'il soit dans le deuxième état de fonctionnement, et actionner la force d'entraînement appliquée à la roue d'entraînement (013) sur la base du deuxième paramètre de couple, lorsqu'une entrée comprenant le troisième paramètre d'état de la route est reçue par l'appareil (500) pour simulant l'environnement d'exercice.

**FIG. 1**

**FIG. 2**

**FIG. 3**

| receiving an input including a simulation parameter for simulating environmental conditions for exercise |
| --- |

| generating a control parameter for controlling the actuator based on the simulation parameter |
| --- |

| controlling the actuator to actuate the driving force applied to the driven wheel based on the control parameter |
| --- |

**FIG. 4**

| Exercise equipment | Terminal device | Virtual reality device |
|---|---|---|

receiving an input including a simulation parameter for simulating environmental conditions for exercise

receiving an input indicating a target exercise distance

transmitting a biometric signal collected from a user

verifying the identity of the user based on the biometric signal

transmitting a signal indicating a pressure applied to the exercise equipment by a user

determining a body weight of the user based on the pressure

receiving an input indicating a target body weight

determining a fitness regimen based on the body weight and the target body weight

generating a control parameter for controlling the actuator based on the simulation parameter

displaying at least one virtual reality environment options

receiving an input indicating that one of the at least one virtual reality environment options is selected as a target virtual reality environment option

selecting a virtual reality environment corresponding to the target virtual reality environment option as a target virtual reality environment

transmitting a signal to the virtual reality device for displaying the target virtual reality environment corresponding to the selected virtual reality environment option

displaying the target virtual reality environment

controlling the actuator to actuate the driving force applied to the driven wheel based on the control parameter

determining one or both of a target amount of calories-burned and a target amount of sweat-generated based on the simulation parameter and the target exercise distance

generating an exercise summary based on one or both of the target amount of calories-burned and the target amount of sweat-generated

displaying the exercise summary

updating the fitness regimen based on the body weight of the user, the target body weight, and the exercise summary

**FIG. 5**

Terminal device

Exercise equipment

transmitting the control parameter

controlling the actuator to actuate the driving force applied to the driven wheel based on the control parameter

transmitting a signal indicating a rotating speed of the driving wheel

determining an exercise speed based on a value of the rotating speed of the driving wheel

determining a target exercise duration based on the target exercise distance and the exercise speed

transmitting a signal indicating the target exercise duration

controlling the actuator to adjust a target duration during which the driving force is applied to the driven wheel based on the target exercise duration

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130059698 A1